# EUROPÄISCHE PATENTSCHRIFT

(11) **EP 3 556 208 B1**
(45) Veröffentlichungstag und Bekanntmachung des Hinweises auf die Patenterteilung: **25.11.2020**
(21) Anmeldenummer: 19162540.9
(22) Anmeldetag: 13.03.2019
(51) Int. Cl.: A01M 7/00

(54) **LANDWIRTSCHAFTLICHE VERTEILMASCHINE UND VERFAHREN ZUM AUSBRINGEN VON FLÜSSIGEN WIRKSTOFFEN**
AGRICULTURAL DISTRIBUTOR AND METHOD FOR DISTRIBUTING LIQUID AGENTS
ÉPANDEUR AGRICOLE ET PROCÉDÉ D'ÉPANDAGE DE SUBSTANCES ACTIVES LIQUIDES

(30) Priorität: 20.03.2018 DE 102018106538
(43) Veröffentlichungstag der Anmeldung: 23.10.2019
(73) Patentinhaber: HORSCH LEEB Application Systems GmbH, 94405 Landau an der Isar (DE)
(72) Erfinder: Leeb, Theodor, 94562 Oberpöring (DE)
(74) Vertreter: v. Bezold & Partner Patentanwälte - PartG mbB

(56) Entgegenhaltungen:
- EP-A1- 2 921 050
- CN-A- 105 850 960
- CN-A- 106 882 380
- DE-U1-202008 012 021
- US-A1- 2012 012 673
- US-B1- 6 375 089

## Beschreibung

Die Erfindung betrifft eine landwirtschaftliche Verteilmaschine zum Ausbringen von flüssigen Wirkstoffen. Die Erfindung betrifft ferner ein Verfahren zum Ausbringen mindestens eines flüssigen Wirkstoffes auf einen Pflanzenbestand, der mehrere Fahrgassen aufweist, mittels einer landwirtschaftlichen Verteilmaschine.

Landwirtschaftliche Verteilmaschinen bzw. sog. Feldspritzen werden zum Ausbringen bzw. zur Applikation von flüssigen Wirkstoffen, z. B. Pflanzenschutz- und/oder Düngemittel verwendet. Derartige Feldspritzen mit einer quer zur Fahrtrichtung orientierten und über einen Pflanzenbestand bewegten Verteilvorrichtung, gebildet normalerweise durch ein Spritzgestänge, sind in unterschiedlichen Ausführungsvarianten bekannt und beispielhaft beschrieben in den Dokumenten EP 3 007 553 B1 oder EP 2 591 657 A1.

Mit derartigen Feldspritzen soll das Ziel verfolgt werden, ein definiertes Flüssigkeitsvolumen an Pflanzenschutz- und/oder Düngemitteln gleichmäßig und mit definierbarer Intensität auf einem Pflanzenbestand auszubringen, wobei das Verteilen des Flüssigkeitsvolumens möglichst in Abhängigkeit vom jeweils auszubringenden Pflanzenschutzmitteln erfolgen soll. Um eine möglichst gleichmäßige Verteilung zu erreichen, sind aus dem Stand der Technik verschiedene Möglichkeiten bekannt.

Am Spritzgestänge der Verteilvorrichtung sind in Abständen zueinander angeordnete Düsenträger (Düsenstöcke) vorhanden, an diesen Düsenträger ist wiederum wenigstens eine Spritzdüse angebracht. Die Spritzdüsen erzeugen jeweils einen zum Boden bzw. zum Pflanzenbestand hin ausgerichteten Sprühkegel zum gewünschten Verteilen des Wirkstoffes. In Abhängigkeit von der Anzahl und der Art der jeweils angesteuerten Spritzdüsen lassen sich unterschiedliche Düsenprofile konfigurieren.

Ein Düsenstock, dem mehrere Spritzdüsen mit unterschiedlichen Eigenschaften zugeordnet sind, ist beispielsweise offenbart in dem Dokument DE 10 2011 053 420 A1. Je nach gewünschtem Tropfen- oder Ausbringspektrum können unterschiedliche Spritzdüsen angesteuert bzw. unterschiedliche Düsenprofile erzeugt werden. Zur Steuerung des ausgebrachten Wirkstoffes können neben dem ausgewählten Düsenprofil ferner die Höhenführung, d. h. der Abstand des Spritzgestänges vom Pflanzenbestand, und der Spritzdruck, mit dem der flüssige Wirkstoff ausgebracht wird, variiert werden.

Aus der Offenlegungsschrift DE 10 2012 101 013 A1 ist ein Ansatz bekannt, bei der Bearbeitung von sog. Reihenkulturen, welche jeweils in Reihen mit großem Abstand zueinander angepflanzt sind, jeweils entsprechende Spritzdüsen abzuschalten. Nachteilig hieran ist, dass ein Abschalten dazu führt, dass die Randbereiche jeweils nicht in einer gewünschten Art und Weise mit dem auszubringenden Wirkstoff behandelt werden, was wiederum zu fehlerhaften Behandlungen der jeweiligen Pflanzen führen kann.

Aus der Offenlegungsschrift DE 10 2013 112 441 A1 ist eine landwirtschaftliche Verteilmaschine zum Ausbringen von flüssigen Wirkstoffen bekannt, mittels derer anhand vorgegebener Kriterien automatisiert von einem ersten zu einem zweiten Spritzprofil gewechselt werden kann.

Um auch an den Feldgrenzen eine möglichst exakte Bearbeitung zu erreichen bzw. um insbesondere nicht über Feldgrenzen hinaus zu spritzen, ist es aus der Praxis bekannt, an den äußeren Bereichen sog. Randdüsen bzw. Grenzdüsen anzubringen. Die Randdüsen unterscheiden sich von Standardspritzdüsen dadurch, dass diese ein asymmetrisches Spritzprofil aufweisen, d. h. keinen gleichmäßig nach unten gerichteten Sprühkegel, sondern einen zu einer Seite hin begrenzten Sprühkegel aufweisen, um somit auch an den Randbereichen eine exakte Behandlung zu erreichen.

Um beim Befahren des jeweiligen Pflanzenbestands diesen bzw. die jeweiligen Nutzpflanzen nicht zu beschädigen, werden in der Regel bereits während der Aussaat jeweils sog. Fahrgassen angelegt, d. h., es werden bestimmte Bereiche der Ackerfläche nicht bestellt, so dass an diesen Stellen keine Pflanzen wachsen, welche beim Befahren der Ackerfläche durch eine mittels eines Zugfahrzeuges gezogenen oder an diesen angebauten oder mittels einer selbstfahrenden Pflanzenschutzspritze beschädigt werden könnten. Die Abstände und Breiten dieser Fahrgassen sind hierbei jeweils auf die sog. Spurbreite der Feldspritze sowie auf deren Reifenbreite abgestimmt. Dadurch können diese Fahrgassen jeweils verschiedenste Ausgestaltungsformen aufweisen. Die Anzahl an Fahrgassen kann jeweils auf die Breite des Spritzgestänges abgestimmt sein. Weitere Stand der Technik Dokumente zu diesem technischen Bereich sind: EP 2 921 050 A1, CN 105 850 960 A, US 2012/012673 A1, DE 20 2008 012021 U1, US 6 375 089 B1, CN 106 882 380 A.

Nachteilig bei den aus dem Stand der Technik bekannten Ansätzen ist, dass üblicherweise auch die Bereiche der Fahrgassen mit besprüht werden, wodurch mitunter auch eine breitere Fläche als gewünscht behandelt wird und Pflanzenschutzmittel an Stellen ausgebracht wird, an welchen dieses nicht benötigt wird. Dies führt zu erhöhten Kosten und einer erhöhten Umweltbelastung.

Es ist somit eine Aufgabe der Erfindung, einen verbesserten Ansatz zum Ausbringen von flüssigen Wirkstoffen mittels einer landwirtschaftlichen Verteilmaschine bereitzustellen, mit dem Nachteile herkömmlicher Techniken vermieden werden können. Die Aufgabe der Erfindung ist es insbesondere, eine verbesserte Möglichkeit zum Ausbringen von flüssigen Wirkstoffen mittels einer landwirtschaftlichen Verteilmaschine bereitzustellen, mittels derer eine kosteneffizientere und umweltfreundlichere Ausbringung von Pflanzenschutz- und/oder Düngemitteln ermöglicht wird.

Diese Aufgaben werden durch landwirtschaftliche Verteilmaschinen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten allgemeinen Gesichtspunkt der Erfindung werden die genannten Aufgaben durch eine landwirtschaftliche Verteilmaschine zum Ausbringen von flüssigen Wirkstoffen gelöst. Flüssige Wirkstoffe sind vorzugsweise Pflanzenschutzmittel und/oder Düngemittel. Vorliegend soll der Begriff "flüssige Wirkstoffe" neben Flüssigkeiten, wie flüssige Pflanzenschutz- und/oder Düngemittel, auch in Flüssigkeiten gelöste feste Wirkstoffe, z. B. Granulate, oder mit einer Trägerflüssigkeit bereitgestellte feste Wirkstoffe umfassen.

Die landwirtschaftliche Verteilmaschine, vorzugsweise eine Feldspritze, umfasst ein Trägerfahrzeug, aufweisend mindestens zwei Laufräder, und ein am Trägerfahrzeug mittelbar oder unmittelbar angeordnetes Spritzgestänge. An dem Spritzgestänge sind mehrere voneinander beabstandete Düsenträger angeordnet. Die Düsenträger sind zur Aufnahme jeweils mindestens einer Spritzdüse zum Verteilen des auszubringenden Wirkstoffes ausgebildet. In jedem Düsenträger, auch als Düsenstock oder Düsenkopf bezeichnet, ist vorzugsweise jeweils mindestens eine Spritzdüse gehaltert. Die landwirtschaftliche Verteilmaschine umfasst ferner eine Steuereinrichtung, die ausgebildet ist, die in den Düsenträgern gehalterten Spritzdüsen anzusteuern.

Die mehreren Düsenträger umfassen erfindungsgemäß mehrere Düsenträger, die nachfolgend als erste Düsenträger bezeichnet werden, in denen jeweils mindestens eine asymmetrisch arbeitende Spritzdüse gehaltert ist, wobei die ersten Düsenträger in Bereichen des Spritzgestänges angeordnet sind, welche - in Fahrtrichtung der Verteilmaschine und/oder in Draufsicht auf die Verteilmaschine gesehen - seitlich angrenzend zur Fahrgasse und/oder zu einer für die Laufräder des Trägerfahrzeugs vorgesehenen Fahrspur angeordnet sind. Hierbei wird davon ausgegangen, dass sich das Spritzgestänge im ausgeklappten Zustand befindet, d. h., dessen Längsachse verläuft quer zur Fahrtrichtung der landwirtschaftlichen Verteilmaschine. Das Spritzgestänge überragt (im ausgeklappten Zustand) die Baubreite der Feldspritze um ein Mehrfaches. Mit anderen Worten können die ersten Düsenträger in Bereichen des Spritzgestänges angeordnet sein, welche - in Fahrtrichtung der Verteilmaschine gesehen - seitlich links angrenzend oder seitlich rechts angrenzend zu einer für die Laufräder des Trägerfahrzeugs vorgesehenen Fahrspur angeordnet sind. Derartige Bereiche werden nachfolgend auch kurz als "Bereiche" bezeichnet. Asymmetrisch arbeitende Spritzdüsen, nachfolgend auch kurz als asymmetrische Spritzdüsen bezeichnet, erzeugen ein asymmetrisches Spritzmuster und sind auch als sog. Randdüsen oder Grenzdüsen bekannt.

Diese Anordnung und Verwendung von asymmetrischen Spritzdüsen bieten den besonderen Vorzug, dass das unerwünschte Ausbringen von Pflanzenschutz- und/oder Düngemittel auf die Oberflächen von Fahrgassen reduziert werden kann und gleichzeitig ein wirksamer Auftrag auf die Bereiche des Pflanzenbestands ermöglicht wird, die an die Fahrspuren oder Fahrgassen angrenzen. Dies ermöglicht ein kosteneffizienteres und umweltfreundlicheres Ausbringen des flüssigen Wirkstoffes beim Fahren in Fahrgassen. Vorzugsweise sind die asymmetrisch arbeitenden Spritzdüsen der ersten Düsenträger jeweils derart angeordnet, dass ihre Seite mit kleinerem Spritzwinkel der angrenzenden Fahrspur bzw. der angrenzenden Fahrgasse zugewandt ist. Hierdurch wird das Spritzbild zur Fahrspur und zur Fahrgasse hin stärker begrenzt und möglichst randscharf abgeschnitten. Somit erlaubt der asymmetrische Spritzwinkel der Spritzdüse(n) der ersten Düsenträger eine randscharfe Behandlung des an die Fahrspur und/oder Fahrgasse angrenzenden Pflanzenbestands, so dass ein Austrag auf den Bereich der Fahrspur bzw. Fahrgasse deutlich reduziert werden kann. Die zu einem ersten Düsenträger angrenzende Fahrspur bzw. die angrenzende Fahrgasse ist diejenige, die den kleinsten Abstand zur jeweiligen Spritzdüse bzw. zum jeweiligen Düsenträger hat.

Die ersten Düsenträger oder zumindest ein Teil der ersten Düsenträger können vorzugsweise jeweils als Mehrfachdüsenträger, beispielsweise als Zweifach- oder Vierfachdüsenträger, ausgebildet sein. Der Mehrfachdüsenträger kann mit mindestens einer symmetrisch arbeitenden Spritzdüse und mit mindestens einer asymmetrisch arbeitenden Spritzdüse bestückt sein. Dies bietet den Vorteil, dass wahlweise zwischen einer asymmetrisch arbeitenden und einer symmetrisch arbeitenden Spritzdüse gewechselt werden kann, je nachdem ob z. B. die Fahrspur bzw. Fahrgasse besprüht werden soll oder nicht.

Ferner besteht die Möglichkeit, dass der Mehrfachdüsenträger mit mindestens zwei unterschiedliche Spritzkegel erzeugenden asymmetrischen Spritzdüsen bestückt ist. Dies ist besonders vorteilhaft, um beispielsweise bei unterschiedlichen Fahrspurbreiten oder unterschiedlichen Fahrgassenbreiten Spritzdüsen mit unterschiedlichen asymmetrischen Spritzkegeln einzusetzen, um den Randbereich, bis zu dem gespritzt wird, variieren zu können.

Gemäß einer bevorzugten Ausführungsform kann jeder der Bereiche des Spritzgestänges, die - in Fahrtrichtung der Verteilmaschine gesehen - seitlich angrenzend zu einer der für die Laufräder des Trägerfahrzeugs vorgesehenen Fahrspuren angeordnet sind, zumindest zwei zueinander benachbarte erste Düsenträger umfassen. Gemäß dieser Ausführungsform weisen somit nicht nur diejenigen Düsenträger, die von den nicht direkt oberhalb der Fahrspuren angeordneten Düsenträger den kleinsten Abstand zu einer Fahrspur bzw. zu einem Bereich direkt oberhalb der Fahrspuren aufweisen, eine asymmetrisch arbeitende Spritzdüse auf, sondern auch mindestens jeweils der hierzu benachbarte Düsenträger.

Dies bietet wiederum den Vorteil, ein randscharfes Spritzen des Randbereichs der Fahrspur bzw. der Fahrgasse bei unterschiedlichen Fahrspurbreiten oder unterschiedlichen Fahrgassenbreiten zu ermöglichen. Bei engen Fahrgassen könnten beispielsweise asymmetrisch arbeitende Spritzdüsen derjenigen Düsenträger zum randscharfen Spritzen der Fahrgasse verwendet werden, die von den nicht direkt oberhalb der Fahrspuren angeordneten Düsenträgern den kleinsten Abstand zur jeweiligen Fahrgasse aufweisen. Bei einer breiteren Fahrgasse, die insbesondere nicht auf die Breite der Fahrspur, d. h. die Reifenbreite des Trägerfahrzeugs abgestimmt ist und daher breiter als diese ist, könnten bei Bedarf beispielsweise asymmetrisch arbeitende Spritzdüsen derjenigen ersten Düsenträger zum randscharfen Spritzen der Fahrgasse verwendet werden, die etwas weiter beabstandet von der nächstliegenden Fahrspur am Spritzgestänge angeordnet sind.

Gemäß einer alternativen Ausführungsform kann jeder der Bereiche des Spritzgestänges, die - in Fahrtrichtung der Verteilmaschine gesehen - seitlich angrenzend zu einer der für die Laufräder des Trägerfahrzeugs vorgesehenen Fahrspuren angeordnet sind, lediglich einen ersten Düsenträger umfassen. Dies ist insbesondere dann vorteilhaft, wenn davon ausgegangen werden kann, dass die Fahrgassenbreite immer auf die Fahrspurbreite abgestimmt ist.

Gemäß einer bevorzugten Ausführungsform ist die Steuereinrichtung ausgebildet, einen Wert zumindest eines der folgenden Fahrparameter zu erfassen: eine Reifenbreite der Laufräder, eine eingestellte Spurbreite des Trägerfahrzeugs und eine Fahrgassenbreite eines zu bespritzenden Feldes. Die Steuereinrichtung ist gemäß dieser Ausführungsform ferner ausgebildet, in Abhängigkeit von dem erfassten Wert des zumindest einen Fahrparameters eine Teilauswahl der asymmetrisch arbeitenden Spritzdüsen der ersten Düsenträger festzulegen.

Ein besonderer Vorzug dieser Ausführungsform liegt darin, dass das Spritzprofil des Spritzgestänges im Betrieb flexibel an unterschiedliche Fahrgassenbreiten, an unterschiedliche Reifenbreiten und/oder an unterschiedliche Spurweite des Trägerfahrzeugs angepasst werden kann. Diese Ausführungsform ist besonders vorteilhaft, wenn jeder erste Düsenträger mindestens zwei unterschiedliche Spritzkegel erzeugende, asymmetrisch arbeitende Spritzdüsen aufweist und/oder jeder der Bereiche mindestens zwei erste Düsenträger mit jeweils mindestens einer asymmetrischen Spritzdüse aufweist. Entsprechend kann die Teilauswahl durch die Steuereinrichtung beispielsweise derart festgelegt werden, dass für jeden Bereich jeweils eine von mehreren verfügbaren asymmetrisch arbeitenden Spritzdüsen ausgewählt und der Teilauswahl zugeordnet wird. Vorzugsweise wird für jeden Bereich diejenige asymmetrisch arbeitende Spritzdüse ausgewählt, die für den bestimmten Wert des mindestens einen Fahrparameters aufgrund ihrer Position am Spritzgestänge oder aufgrund ihres Spritzwinkels ein möglichst gutes randscharfes Spritzen des an den Randbereich der Fahrspur oder Fahrgasse angrenzenden Pflanzenbestands ermöglicht.

Hierzu kann in der Steuereinrichtung eine Zuordnungsvorschrift, z. B. in Form einer Tabelle oder Matrix, hinterlegt sein, die möglichen Werten des mindestens einen Fahrparameters jeweils eine Teilauswahl der asymmetrischen Spritzdüsen zuordnet. Diese Zuordnungsvorschrift kann beispielsweise vorab experimentell bestimmt werden. Der Wert des zumindest einen Fahrparameters kann sensorisch, d. h. mittels eines zweckmäßig ausgeführten Sensors, erfasst werden. Ein Beispiel hierfür kann ein optischer Sensor sein, der beispielsweise die Fahrgassenbreite ermittelt. Der Wert des zumindest einen Fahrparameters kann jedoch auch dadurch erfasst werden, dass er von einer Bedienperson manuell eingegeben wird, z. B. über ein Eingabeterminal der landwirtschaftlichen Verteilmaschine, oder als ein in einem Speicher, z. B. einer Datenbank, hinterlegter Wert ermittelt wird.

Gemäß einer bevorzugten Ausführungsform ist die Steuereinrichtung ausgebildet, in einem ersten Betriebsmodus zur Erzeugung eines ersten Spritzmusters, die asymmetrischen Spritzdüsen der ersten Düsenträger oder zumindest eine Teilauswahl hiervon anzuschalten, und Spritzdüsen, vorzugsweise symmetrisch arbeitende Spritzdüsen, die oberhalb der für die Laufräder des Trägerfahrzeugs vorgesehenen Fahrspuren angeordnet sind, auszuschalten oder deaktiviert zu lassen.

Dieser erste Betriebsmodus ist besonders vorteilhaft, um bei einer Fahrt durch eine Fahrgasse eine randscharfe Behandlung des an die Fahrspur und/oder Fahrgasse angrenzenden Pflanzenbestands zu ermöglichen, wobei der Austrag auf den Bereich der Fahrspur bzw. Fahrgasse deutlich reduziert ist im Vergleich zu einem Betrieb nur mit symmetrisch arbeitenden Spritzdüsen. Die Steuereinrichtung kann in dem ersten Betriebsmodus und mindestens einem anderen Betriebsmodus betrieben werden.

Gemäß einem weiteren Aspekt kann die Steuereinrichtung ausgebildet sein, in einem zweiten Betriebsmodus zur Erzeugung eines zweiten Spritzmusters die asymmetrischen Spritzdüsen der ersten Düsenträger auszuschalten oder deaktiviert zu lassen. Ferner kann die Steuereinrichtung gemäß einer Variante dieses Aspekts ausgebildet sein, in dem zweiten Betriebsmodus symmetrisch arbeitende Spritzdüsen anzuschalten, die in dem ersten Düsenträger zusätzlich zu den asymmetrisch arbeitenden Spritzdüsen angeordnet sind und/oder die in den Bereichen des Spritzgestänges angeordnet sind, die - in Fahrtrichtung der Verteilmaschine gesehen - seitlich angrenzend zu einer der für die Laufräder des Trägerfahrzeugs vorgesehenen Fahrspuren angeordnet sind. Ferner kann die Steuereinrichtung ausgebildet sein, in dem zweiten Betriebsmodus symmetrisch arbeitende Spritzdüsen anzuschalten, die direkt oberhalb der für die Laufräder des Trägerfahrzeugs vorgesehenen Fahrspuren angeordnet sind. Ferner kann die Steuereinrichtung ausgebildet sein, in dem zweiten Betriebsmodus vorzugsweise alle symmetrisch arbeitenden Spritzdüsen anzuschalten. Der zweite Betriebsmodus entspricht somit einem Betriebsmodus, bei dem auch die Fahrspuren und/oder Fahrgassen mitbesprüht werden.

Gemäß einem weiteren Aspekt kann die Steuereinrichtung ausgebildet sein, einen Wert eines ersten Betriebsparameters zu erfassen, wobei der Wert des ersten Betriebsparameters angibt und/oder aus dem Wert ableitbar ist, ob die landwirtschaftliche Verteilmaschine während des Spritzbetriebs in einer Fahrgasse fährt oder nicht, z. B. statt in einer Fahrgasse auf einem Vorgewende fährt. Gemäß dieser Variante ist die Steuereinrichtung ferner ausgebildet, eine Entscheidung zur Auswahl des ersten Betriebsmodus in Abhängigkeit von dem erfassten Wert des ersten Betriebsparameters zu treffen. Beispielsweise kann die Steuereinrichtung ausgebildet sein, den ersten Betriebsmodus auszuwählen, falls der erfasste Wert des ersten Betriebsparameters angibt, dass die landwirtschaftliche Verteilmaschine in einer Fahrgasse fährt. Die Steuereinrichtung kann ausgebildet sein, den ersten Betriebsmodus zu deaktivieren und/oder den zweiten Betriebsmodus auszuwählen, falls der erfasste Wert des ersten Betriebsparameters angibt, dass die landwirtschaftliche Verteilmaschine auf dem Vorgewende fährt.

Um die Kosten für den auszubringenden flüssigen Wirkstoff und die Umweltbelastung weiter zu reduzieren, kann die Steuereinrichtung ausgebildet sein, bei Auswahl des ersten Betriebsmodus eine Reduzierung der Ausbringmenge des flüssigen Wirkstoffes zu bestimmen. Im ersten Betriebsmodus erfolgt kein Austrag auf die Fahrgassen oder die Fahrspur, so dass sich der Bedarf an auszubringendem flüssigem Wirkstoff pro gefahrener Streckeneinheit des Spritzgestänges verringert. Die Reduzierung der Ausbringmenge kann vorzugsweise entsprechend der im ersten Betriebsmodus weniger behandelten Fläche, beispielsweise entsprechend dem prozentualen Anteil der Breite der beiden Fahrgassen oder Fahrspuren an der Gesamtbreite des Spritzgestänges bestimmt werden.

Gemäß einem weiteren Aspekt kann die Steuereinrichtung ausgebildet sein, einen Wert eines zweiten Betriebsparameters zu erfassen, wobei der Wert des zweiten Betriebsparameters einen Typ eines Pflanzenschutzmittels angibt. Gemäß diesem Aspekt ist die Steuereinrichtung ferner ausgebildet, eine Entscheidung zur Auswahl des ersten Betriebsmodus in Abhängigkeit von dem erfassten Wert des zweiten Betriebsparameters zu treffen.

So kann es beispielsweise bei der Verwendung von Mitteln zur Unkrautbekämpfung, d. h. zur Bekämpfung von Pflanzen, die nicht der Kulturpflanze entsprechen, gewünscht sein, ebenso im Bereich der Fahrgassen Pflanzenschutzmittel auszubringen. Entsprechend kann die Steuereinrichtung ausgebildet sein, den zweiten Betriebsmodus auszuwählen, falls der erfasste Wert des zweiten Betriebsparameters angibt, dass es sich bei dem Pflanzenschutzmittel um ein Mittel zur Unkrautbekämpfung handelt, das auch auf die Fahrgassen ausgebracht werden soll. Die Steuereinrichtung kann ferner ausgebildet sein, den ersten Betriebsmodus auszuwählen, falls der erfasste Wert des zweiten Betriebsparameters angibt, dass es sich bei dem Pflanzenschutzmittel um ein Pflanzenschutzmittel gegen schädliche Lebewesen und/oder gegen schädliche Pilze und Sporen handelt, die vorzugsweise nur die Nutzpflanze schädigen.

Gemäß einem weiteren Aspekt kann die Steuereinrichtung ausgebildet sein, einen Wert eines dritten Betriebsparameters zu erfassen, wobei der Wert des dritten Betriebsparameters einen Höhenabstand zwischen Pflanzenbestand und Spritzgestänge und/oder ein Wachstumsstadium der zu bespritzenden Nutzpflanze angibt und/oder ein Maß für den Höhenabstand oder das Wachstumsstadium hieraus ableitbar ist. Gemäß diesem Aspekt kann die Steuereinrichtung ausgebildet sein, die Entscheidung zur Auswahl des ersten Betriebsmodus in Abhängigkeit von dem erfassten Wert des dritten Betriebsparameters zu treffen. Hierdurch kann eine verbesserte Auswahlentscheidung zur Wahl zwischen dem ersten Betriebsmodus, in dem die Fahrgasse nicht besprüht wird, und dem zweiten Betriebsmodus, in dem diese besprüht wird, getroffen werden. Beispielsweise kann die Steuereinrichtung ausgebildet sein, den ersten Betriebsmodus nur auszuwählen, falls der Wert für den Höhenabstand und/oder das Wachstumsstadium einen vorgegebenen Schwellenwert unterschreitet. Mit anderen Worten kann eine Ansteuerung der asymmetrisch arbeitenden Spritzdüsen in Abhängigkeit des Wachstumsstadiums der Nutzpflanzen erfolgen, so dass beispielsweise bei sehr großen Pflanzen keine Ansteuerung der asymmetrischen Spritzdüsen erfolgt, bei kleinen Pflanzen jedoch schon, da hier ausgebrachte Flüssigkeit über die Spitze der kleinen Nutzpflanzen bis in die Fahrgasse gelangen kann.

Die Steuereinrichtung kann demzufolge ferner ausgebildet sein, symmetrisch arbeitende Spritzdüsen zu aktivieren, die in den Bereichen des Spritzgestänges angeordnet sind, welche - in Fahrtrichtung der Verteilmaschine gesehen - seitlich angrenzend zu einer für die Laufräder des Trägerfahrzeugs vorgesehenen Fahrspur angeordnet sind, falls der Wert für den Höhenabstand und/oder das Wachstumsstadium den vorgegebenen Schwellenwert erreicht oder überschreitet.

Gemäß einem weiteren Aspekt kann die Steuereinrichtung ausgebildet sein, einen Wert eines vierten Betriebsparameters zu erfassen, wobei der Wert des vierten Betriebsparameters ein Maß für einen Schädlings- und/oder Unkrautbefall der zu bespritzenden Fahrspur und/oder Fahrgasse angibt. Gemäß diesem Aspekt kann die Steuereinrichtung ausgebildet sein, eine Entscheidung zur Auswahl des ersten Betriebsmodus in Abhängigkeit von dem erfassten Wert des vierten Betriebsparameters zu treffen.

Der erfasste Wert des ersten Betriebsparameters kann ein sensorisch erfasster Wert, ein von einer Bedienperson manuell eingegebener Wert, ein in einem Speicher, z. B. einer Datenbank, hinterlegter Wert und/oder über eine Datenschnittstelle empfangener Wert sein. Entsprechendes gilt für die zu erfassenden Werte des zweiten, dritten und vierten Betriebsparameters.

Beispielsweise kann der erste Betriebsparameter sensorisch mittels eines Lenkwinkelsensors oder mittels mindestens eines an dem Spritzgestänge angeordneten Beschleunigungssensors erfasst werden. Alternativ oder zusätzlich kann auch eine Eingabemöglichkeit für eine Bedienperson vorgesehen sein, mittels derer die Bedienperson direkt den Wert des ersten Betriebsparameters eingeben kann, d. h. ob das die Verteilmaschine zum Ausbringen des flüssigen Wirkstoffes in einer Fahrgasse oder auf einem Vorgewende fährt.

Die Steuereinrichtung kann ausgebildet sein, eine Entscheidung zur Auswahl des ersten und/oder des zweiten Betriebsmodus in Abhängigkeit von dem erfassten Wert bzw. den erfassten Werten des ersten, zweiten, dritten und/oder vierten Betriebsparameters zu treffen. Mit den vorgenannten Betriebsparametern kann für die Mehrzahl an üblichen Einsatzszenarien der landwirtschaftlichen Verteilmaschine das für die aktuelle Betriebs- und/oder Einsatzsituation optimale Spritzmuster des flüssigen Wirkstoffes, welches insbesondere festlegt, ob die Fahrgasse mitbesprüht werden oder nicht, bestimmt werden.

Gemäß einem weiteren Aspekt können die Düsenträger derart am Spritzgestänge angeordnet sein, dass ein Abstand zweier erster Düsenträger, die auf unterschiedlichen Seiten seitlich angrenzend zu einer der für die Laufräder des Trägerfahrzeugs vorgesehenen Fahrspuren angeordnet sind, a) mindestens 25 cm, mindestens 50 cm oder mindestens 60 cm beträgt und/oder b) mindestens einer Breite des Laufrades und/oder mindestens einer Breite einer Fahrgasse entspricht. Ferner kann ein Abstand zweier erster Düsenträger, die auf unterschiedlichen Seiten seitlich angrenzend zu einer der für die Laufräder des Trägerfahrzeugs vorgesehenen Fahrspuren angeordnet sind, höchstens 100 cm betragen.

Die Anordnung der asymmetrischen Spritzdüsen kann an verschiedensten bzw. in verschiedensten Abständen zueinander erfolgen, um somit eine Anpassung an verschiedene Fahrgassenbreiten zu ermöglichen. Hierbei kann in der Steuereinrichtung vorgesehen sein, dass eine Radbreite oder Fahrspurbreite eingegeben werden kann und mittels des Steuerungsprogramms eine automatische Ansteuerung der für die jeweilige Radbreite erforderlichen Spritzdüsen erfolgt. Auch könnten verschiedene Radbreiten im Steuerungsprogramm der Steuereinrichtung hinterlegt sein und jeweils entsprechend abgerufen werden.

Ferner können die Fahrgassen verschiedene Abstände zueinander aufweisen, beispielsweise 2,25 m oder 2,5 m oder 3 m. Gemäß einem weiteren Aspekt können Düsenträger, die mindestens eine asymmetrisch arbeitende Spritzdüse aufweisen, auch jeweils in diesen Abständen oder in mindestens diesen Abständen zueinander angebracht sein, um somit sowohl auf unterschiedliche Fahrspuren als auch auf unterschiedliche Radbreiten entsprechend reagieren zu können. Gemäß einem weiteren Aspekt kann die Ansteuerung der Spritzdüsen auch in Abhängigkeit von den jeweiligen, mittels der Spritzdüsen erzeugten Spritzkegel erfolgen, d. h., je größer oder kleiner der jeweilige Spritzkegel ist, desto mehr oder weniger Spritzdüsen werden geschalten. Ebenso besteht die Möglichkeit, in Abhängigkeit von den Spritzkegeln wiederum den Höhenabstand zwischen Pflanzenbestand und Spritzgestänge einzustellen.

Um zudem die Feldspritze auch für Reihenkulturen verwenden zu können, kann zudem vorgesehen sein, dass das Spritzgestänge ferner weitere Düsenhalter mit mindestens einer asymmetrisch arbeitenden Spritzdüse aufweist, wobei die Abstände dieser Düsenhalter den Abständen der Reihen der Reihenkulturen entsprechen.

Die Spritzdüsen können in an sich bekannter Weise mittels zugeordneter Betätigungselemente, insbesondere Pneumatikventile und/oder Elektroventile, durch die Steuereinrichtung schaltbar sein. Ferner können die Spritzdüsen als Spritzdüsen ausgeführt sein, die über ein durch PWM-(Pulsweitenmodulation) angesteuertes Magnetventil gesteuert werden. Ein Abstand zweier benachbarter Düsenträger kann 25 cm oder 50 cm betragen. Ferner können die ersten Düsenträger asymmetrisch arbeitende Spritzdüsen aufweisen, deren Spritzkegel variabel einstellbar ist, insbesondere durch eine Steuereinrichtung variabel einstellbar ist. Bei den asymmetrischen arbeitenden Spritzdüsen kann es sich um sog. Randdüsen oder Grenzdüsen handeln, wobei diese jedoch nicht wie üblich an einem äußerem Endbereich des Spritzgestänges angeordnet sind, sondern in den an die Fahrspuren angrenzenden Bereichen.

Die landwirtschaftliche Verteilmaschine kann in an sich bekannter Weise als selbstfahrende Feldspritze oder als gezogene landwirtschaftliche Feldspritze ausgeführt sein. Eine selbstfahrende Feldspritze oder eine gezogene Feldspritze weisen auch ein Trägerfahrzeug auf, an welchem Trägerfahrzeug das Spritzgestänge vorzugsweise unmittelbar, insbesondere in dessen hinterem Bereich angebracht ist. Die landwirtschaftliche Verteilmaschine kann auch aus einem Zugfahrzeug, beispielsweise einem Traktor, und einer als Dreipunktspritze oder Anbaufeldspritze ausgeführten landwirtschaftlichen Feldspritze gebildet sein. Das Zugfahrzeug bildet hier das Trägerfahrzeug, an welches die Dreipunktspritze oder Anbaufeldspritze angebaut ist und welche wiederum ein Spritzgestänge aufweist. In dieser Ausführungsvariante ist somit das Spritzgestänge vorzugsweise nur mittelbar am Trägerfahrzeug angebracht.

Die Steuereinrichtung kann programmtechnisch eingerichtet sein, die in diesem Dokument beschriebenen Funktionen auszuführen. Die Steuereinrichtung kann als ein zentrales Steuergerät oder als eine beliebige Vielzahl von elektronischen Verarbeitungseinrichtungen, Speichereinrichtungen und/oder von anderen bekannten Komponenten zur Ansteuerung der Spritzdüsen und Düsenhalter ausgeführt sein. So kann beispielsweise die Steuereinrichtung in ein Steuergerät integriert sein, das eine Höhenführung des Spritzgestänges und dessen Drehlage um eine Längsachse des Trägerfahrzeugs steuert und/oder regelt, und/oder in ein Steuergerät integriert sein, das den Spritzdruck, mit dem der flüssige Wirkstoff ausgebracht wird, steuert.

Gemäß einem zweiten allgemeinen Gesichtspunkt der Erfindung werden die genannten Aufgaben durch ein Verfahren zum Ausbringen mindestens eines flüssigen Wirkstoffes auf einen Pflanzenbestand, der mehrere Fahrgassen aufweist, mittels einer landwirtschaftlichen Verteilmaschine gelöst.

Das Verfahren umfasst die Bereitstellung einer landwirtschaftlichen Verteilmaschine, die entlang der Fahrgassen verfahrbar ist. Die landwirtschaftliche Verteilmaschine umfasst ein Trägerfahrzeug, aufweisend mindestens zwei Laufräder, die entsprechend einem Abstand der parallelen Spuren der Fahrgasse quer zur Fahrtrichtung voneinander beabstandet sind. Die landwirtschaftliche Verteilmaschine umfasst ferner ein am Trägerfahrzeug unmittelbar oder mittelbar angeordnetes Spritzgestänge, an welchem mehrere voneinander beabstandete Düsenträger angeordnet sind, die zur Aufnahme jeweils mindestens einer Spritzdüse zum Verteilen des auszubringenden Wirkstoffes ausgebildet sind. Die landwirtschaftliche Verteilmaschine umfasst ferner eine Steuereinrichtung, die ausgebildet ist, in Abhängigkeit von mindestens einem ersten Betriebsparameter die in den Düsenträger gehalterten Spritzdüsen anzusteuern.

Die mehreren Düsenträger umfassen mehrere erste Düsenträger, in denen jeweils mindestens eine asymmetrisch arbeitende Spritzdüse gehaltert ist, wobei die ersten Düsenträger in Bereichen des Spritzgestänges angeordnet sind, welche zu einer für die Laufräder des Trägerfahrzeugs vorgesehenen Fahrspur und/oder zu einer Fahrgasse in Fahrtrichtung der Verteilmaschine gesehen seitlich angrenzend angeordnet sind.

Zur Vermeidung von Wiederholungen sollen rein vorrichtungsgemäß bzw. in Zusammenhang mit der landwirtschaftlichen Verteilmaschine offenbarte Merkmale auch als verfahrensgemäß offenbart gelten und beanspruchbar sein und umgekehrt. Die vorgenannten Aspekte und erfindungsgemäßen Merkmale, insbesondere im Hinblick auf die Ausbildung und Anordnung der asymmetrisch arbeitenden Spritzdüsen und deren Ansteuerung durch die Steuereinrichtung, gelten somit auch für das Verfahren.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht einer landwirtschaftlichen Verteilmaschine mit einer daran angeordneten Verteilvorrichtung;
- Figur 2: eine schematische Draufsicht auf eine in einer Fahrgasse fahrenden landwirtschaftliche Verteilmaschine
- Figur 3: eine schematische Darstellung der Flüssigkeitsausbringung in einem ersten Betriebsmodus gemäß einem Ausführungsbeispiel;
- Figur 4: ein schematisches Blockdiagramm zur Illustration der Funktionsweise der Steuereinrichtung zur Ansteuerung der Spritzdüsen gemäß einem Ausführungsbeispiel,
- Figur 5: ein Ablaufdiagramm zur Illustration eines Verfahrens zum Ausbringen mindestens eines flüssigen Wirkstoffes auf einen Pflanzenbestand gemäß einem Ausführungsbeispiel und
- Figur 6: eine schematische Darstellung der Flüssigkeitsausbringung in einem ersten Betriebsmodus gemäß einem weiteren Ausführungsbespiel.

Gleiche oder funktional äquivalente Elemente sind in allen Figuren mit denselben Bezugszeichen bezeichnet und zum Teil nicht gesondert beschrieben.

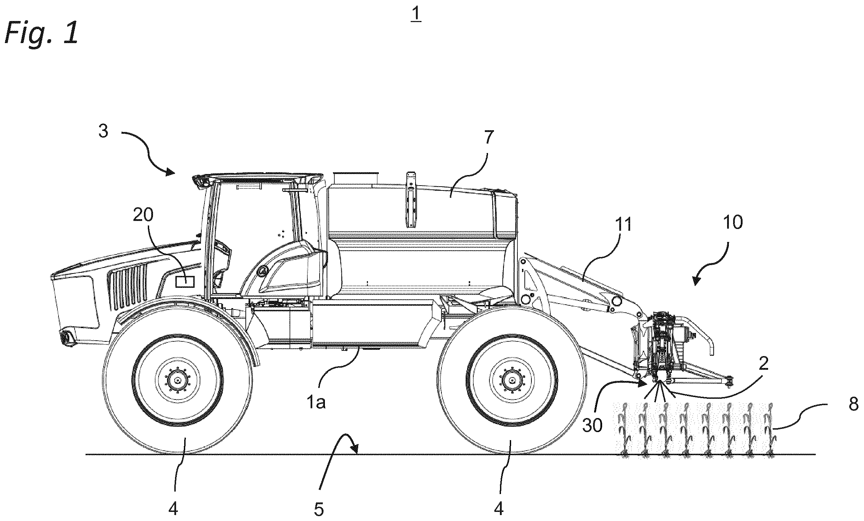

Die schematische Seitenansicht der Figur 1 zeigt eine Ausführungsvariante einer selbstfahrenden landwirtschaftlichen Verteilmaschine 1, die auch als sog. Feldspritze zum Ausbringen von flüssigem Pflanzenschutz- und/oder Düngemittel bezeichnet werden kann. Die Feldspritze 1 ist als selbstfahrende Maschine ausgebildet und umfasst ein Trägerfahrzeug 3 mit eigenem Antrieb und einen Rahmen 1a zum Tragen der einzelnen Baugruppen, einen Vorratsbehälter 7 zum Mitführen der auszubringenden flüssigen Wirkstoffes und ein Spritzgestänge 10, das mittels heckseitig am Trägerfahrzeug 3 angeordneter Stellelemente 11 höhenverstellbar ist. Das Spritzgestänge ist ferner um eine Längsachse des Trägerfahrzeugs 3 schwenkbar zum Trägerfahrzeug gelagert. Das Spritzgestänge, das Trägerfahrzeug und die Ankopplung vom Spritzgestänge an das Trägerfahrzeug können lediglich beispielweise ausgeführt sein, wie es in den Offenlegungsschriften EP 3 007 553 A1 und EP 2 591 657 A1 beschrieben ist.

Das Spritzgestänge 10 umfasst ein vorzugsweise drehgelagertes Mittelteil 12 und beidseits des Trägerfahrzeugs 3 abstehende seitliche Auslegerarme 13, die wahlweise ein- der mehrfach klappbar ausgebildet sein können, um in eine für eine Straßen- oder Transportfahrt geeignete kompakte Anordnung gebracht werden zu können.

An dem Spritzgestänge 10 ist eine Verteilvorrichtung 30 zum Ausbringen eines flüssigen Wirkstoffes 2, beispielsweise eines Pflanzenschutz- und/oder Düngemittels, auf einem Pflanzenbestand 8 vorgesehen. Die Verteilvorrichtung 30 umfasst mehrere, am Spritzgestänge 10 angeordnete, voneinander beabstandete Düsenträger (Düsenstöcke) und darin gehalterten Spritzdüsen, was auch als Spritzbalkenanordnung bezeichnet wird. Die Spritzdüsen werden in an sich bekannter Weise über eine Flüssigkeitszufuhrleitung mit dem auszubringenden flüssigen Wirkstoff (Spritzflüssigkeit) versorgt.

Die Düsenträger sind in Abständen von beispielsweise 25 cm oder 50 cm zueinander in Längsrichtung des Spritzgestänges 10 angebracht. In den Düsenträgern sind jeweils mindestens eine Spritzdüse zum gleichmäßigen Verteilen der Pflanzenschutz- und/oder Düngerflüssigkeit gehaltert. In der Regel sind die Düsenträger als Mehrfachdüsenträger ausgebildet und haltern mehr als eine Spritzdüse. Die Spritzdüsen 30 erzeugen einen zum Pflanzenbestand 8 hin gerichteten Sprühkegel.

Die Feldspritze 1 umfasst ferner eine Steuereinrichtung 20, z. B. ein Steuergerät, zum Steuern der einzelnen Maschinenelemente, des Spritzgestänges und der Verteilvorrichtung 30 zum Ausbringen des flüssigen Wirkstoffes. Die Steuereinrichtung 20 kann in sich bekannter Weise ausgebildet sein, um in Abhängigkeit von verschiedenen Parametern die Verteilvorrichtung 30 anzusteuern, derart, dass wahlweise unterschiedliche Spritzprofile erzeugt werden können, wie dies beispielhaft in der Offenlegungsschrift WO 2016/030368 A1 beschrieben ist.

Die Spritzdüsen können hierbei einzeln, gruppenweise und/oder gemeinsam mittels der Steuereinrichtung 20 angesteuert werden. Hierfür sind den Spritzdüsen in an sich bekannter Weise von Betätigungselementen ansteuerbare Ventile zum An- und Abschalten der Spritzdüsen zugeordnet, wobei die Betätigungselemente von der Steuereinrichtung 20 ansteuerbar sind. Der in der Flüssigkeitszufuhrleitung und damit an den Spritzdüsen anliegende Spritzdruck kann ebenfalls von der Steuereinrichtung 20 in an sich bekannter Weise zur Steuerung der Menge des ausgebrachten Wirkstoffes und zur Erzeugung unterschiedlicher Spritzprofile gesteuert werden, wie es beispielhaft in der Offenlegungsschrift WO 2016/ 03 0368 A1 beschrieben ist.

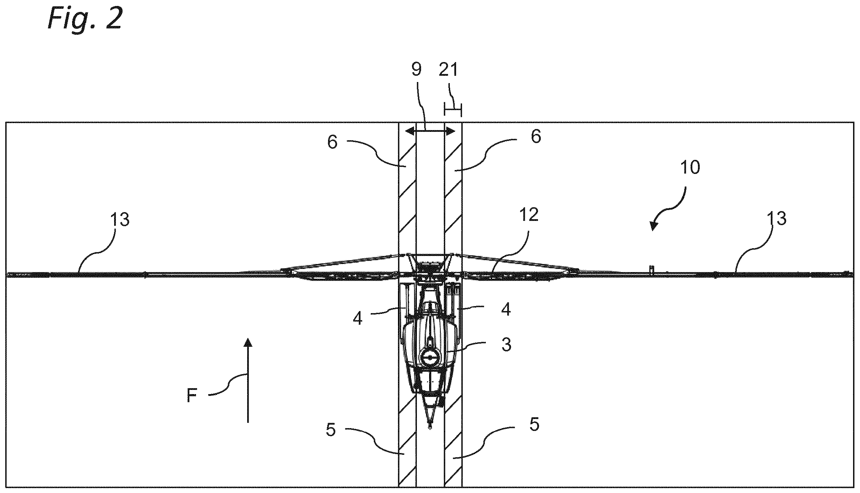

Figur 2 zeigt eine schematische Draufsicht auf eine in einer Fahrgasse 6 fahrende landwirtschaftliche Verteilmaschine, wobei es sich gegenüber der in Figur 1 dargestellten Verteilmaschine hierbei um eine mittels eines Zugfahrzeug (hier nicht dargestellt) gezogene Verteilmaschine handelt. 1. Die Laufräder 4 des zweispurigen Trägerfahrzeugs 3 fahren entlang einer der beiden Fahrspuren 5, was in Figur 2 gut erkennbar ist. Mit anderen Worten bildet die von den linksseitigen Laufrädern überfahrene Fläche eine erste Fahrspur und die von den rechtsseitigen Laufrädern überfahrende Fläche eine zweite Fahrspur aus. Vorstehend wurde bereits festgestellt, dass es üblich ist, sog. Fahrgassen 6 anzulegen, d. h., es werden bestimmte Bereiche der Ackerfläche nicht bestellt. An diesen Stellen wachsen keine Nutzpflanzen, so dass beim Befahren der Ackerfläche unter Nutzung der Fahrgassen die jeweiligen Nutzpflanzen nicht durch die Fahrspur der landwirtschaftlichen Maschine beschädigt werden. Die Abstände 9 und Breiten 21 dieser Fahrgassen 6 sind hierbei jeweils auf die sog. Spurbreite der Feldspritze sowie auf deren Reifenbreite und damit die Breite der Fahrspur 5 abgestimmt, was in Figur 2 ebenfalls erkennbar ist.

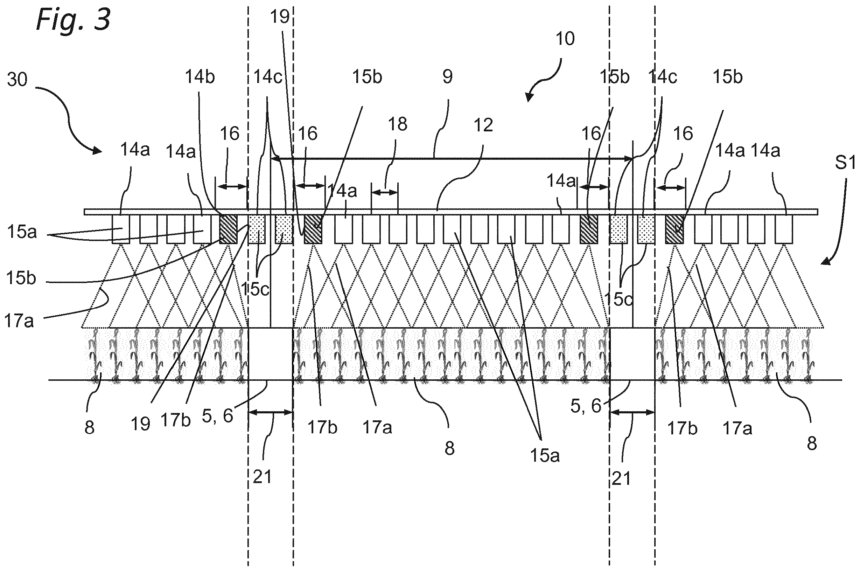

Figur 3 zeigt eine stark schematisierte Teilansicht des Spritzgestänges 10 und der Verteilvorrichtung 30 zum Ausbringen des flüssigen Wirkstoffes 2 und illustriert gleichzeitig eine Flüssigkeitsausbringung in einem ersten Betriebsmodus. Hierbei zeigt Figur 3 eine Sicht in Fahrtrichtung des Trägerfahrzeugs 3 auf das Spritzgestänge. Der Pflanzenbestand 8 weist Fahrgassen 6 auf, wobei der Abstand 9 der beiden Fahrgassen 6 und die Breite 21 der Fahrgassen 6 hier jeweils auf die sog. Spurbreite der Feldspritze sowie auf deren Reifenbreite und damit die Breite der Fahrspur 5 abgestimmt ist. Die beiden Fahrspuren 5 entsprechen somit den beiden Fahrgassen 6 in Figur 3.

Die in Figur 3 gezeigte Teilansicht zeigt einen mittleren Bereich 12 des Spritzgestänges 10, der sich oberhalb und zwischen den beiden Fahrgassen 6 bzw. Fahrspuren 5 erstreckt. Vorstehend wurde bereits festgestellt, dass in Längsrichtung des Spritzgestänges 10 in Abständen 18 von beispielsweise 25 cm oder 50 cm zueinander Düsenträger 14a, 14b, 14c angebracht sind, in denen mindestens eine Spritzdüse 15a, 15b, 15c, in der Regel jedoch mehrere Spritzdüsen zum gleichmäßigen Verteilen der Pflanzenschutz- und/oder Düngerflüssigkeit gehaltert sind. Die Düsenträger können beispielsweise als Zweifach- oder Vierfachdüsenträger ausgebildet sein. Die Figur 3 zeigt beispielhaft eine Düsenanordnung, bei der die Düsenträger im Abstand 18 von 25 cm angeordnet sind.

Eine Besonderheit der in Figur 3 schematisch illustrierten Spritzdüsenanordnung ist, dass in Bereichen 16 des Spritzgestänges 10, welche - in Fahrtrichtung F der Verteilmaschine 1 gesehen - seitlich angrenzend zu einer für die Laufräder 4 des Trägerfahrzeugs 3 vorgesehenen Fahrspur 5 angeordnet sind, Düsenträger 14b angeordnet sind, in denen jeweils mindestens eine asymmetrisch arbeitende Spritzdüse 15b gehaltert ist. Diese Düsenträger werden in diesem Dokument als erste Düsenträger 14b bezeichnet. Der Bereich 16 mit den ersten Düsenträgern 14b liegt somit nicht direkt oberhalb der Fahrspur 5 oder Fahrgasse 6, sondern in der Ansicht der Figur 3 seitlich links oder seitlich rechts angrenzend hierzu. Zur besseren Hervorhebung sind Spritzdüsen 15b der ersten Düsenhalter 14b schwarz-weiß-schraffiert gekennzeichnet und Spritzdüsen 15c, die einem Düsenhalter 14c gehaltert sind, der sich direkt oberhalb der Fahrspur 5 oder Fahrgasse 6 befindet, schwarz-weiß-gepunktet gekennzeichnet.

Die mindestens eine asymmetrisch arbeitende Spritzdüse 15b des ersten Düsenträgers 14b ist in diesem so angeordnet, dass ihre Seite 19 mit kleinerem Spritzwinkel der angrenzenden Fahrspur 5 zugewandt ist. Dies ist in Figur 3 durch den asymmetrischen Spritzkegel 17b der Spritzdüsen 15b dargestellt, wobei der kleinere Spritzwinkel der asymmetrischen Spritzkegel auf der Seite der nächstliegenden Fahrgasse 6 liegt, um auf dem Bereich des Pflanzenbestands, der an eine Fahrgasse angrenzt, ein möglichst randscharfes Ausbringen des flüssigen Wirkstoffes und eine möglichst exakte Bearbeitung dieses Bereichs zu ermöglichen.

Gemäß dieser in Figur 3 gezeigten Spritzdüsenanordnung kann somit ein effizienteres und umweltschonenderes Ausbringen des flüssigen Wirkstoffes beim Fahren in Fahrgassen 6 realisiert werden. Beim Fahren in einer Fahrgasse kann die Steuereinrichtung 20 die asymmetrisch arbeitenden Spritzdüsen 15b anschalten, wobei gleichzeitig die direkt oberhalb der Fahrspur angeordneten Spritzdüsen 15c abgeschaltet werden. Die anderen Spritzdüsen 15a, die in Düsenträgern 14a gehaltert sind, die weiter weg als die ersten Düsenträger 14b von der nächsten Fahrspur sind, erzeugen einen symmetrischen Spritzkegel 17a. Ferner können optional an den äußeren Endbereichen der Ausleger 13 ebenfalls asymmetrisch arbeitende Spritzdüsen, sog. Randdüsen, angeordnet sein (nicht dargestellt).

Auf diese Weise wird ein Spritzmuster S1 erzeugt, bei welchem der Bereich der Fahrgasse 6 nicht oder kaum besprüht wird und gleichzeitig eine exakte Ausbringung des Wirkstoffes auf den an die Fahrgassen angrenzenden Bereich des Pflanzenbestand 8 ermöglicht wird. Dieser Betriebsmodus wird in diesem Dokument auch als erster Betriebsmodus M1 der Verteileinrichtung 30 bezeichnet, der in Form entsprechender Steuerbefehle in der Steuereinrichtung 20 hinterlegt ist.

In den ersten Düsenträgern 14b sind neben mindestens einer asymmetrisch arbeitenden Spritzdüse 14b ferner eine symmetrisch arbeitende Spritzdüse gehaltert. Fährt die landwirtschaftliche Verteilmaschine 1 beispielsweise auf einem Vorgewende ohne Fahrgassen, kann die Steuereinrichtung die Verteileinrichtung 30 stattdessen so ansteuern, dass die symmetrisch arbeitenden Spritzdüsen in den ersten Düsenhaltern sowie die symmetrisch arbeitenden Spritzdüsen 15c, die direkt oberhalb der Fahrgassen angeordnet sind, angeschaltet werden. Dieser Betriebsmodus wird in diesem Dokument auch als zweiter Betriebsmodus M2 der Verteileinrichtung 30 bezeichnet, der in Form entsprechender Steuerbefehle ebenfalls in der Steuereinrichtung 20 hinterlegt ist. In diesem zweiten Betriebsmodus werden auch die Fahrspuren mit flüssigem Wirkstoff besprüht, d. h. auch der Bereich, der in Figur 3 als nicht besprüht gekennzeichnet ist.

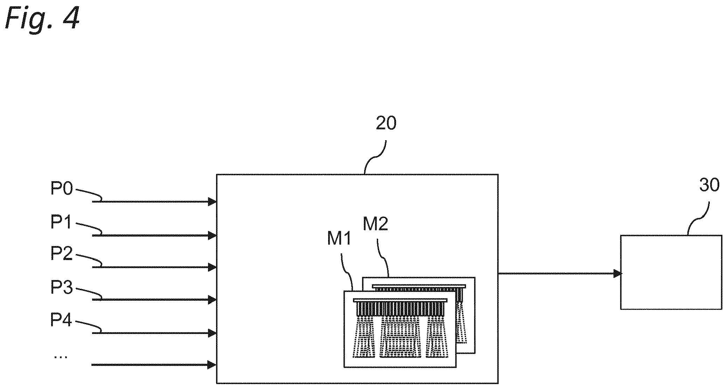

Figur 4 zeigt ein schematisches Blockdiagramm zur Illustration der Funktionsweise der Steuereinrichtung 20 zur Ansteuerung der Spritzdüsen gemäß einem Ausführungsbeispiel. Um wahlweise zwischen dem ersten und zweiten Betriebsmodus hin- und herschalten zu können, ist die Steuereinrichtung 20 ausgebildet, eingangsseitig aktuelle Werte mehrerer Betriebsparameter zu erfassen.

Beispielsweise kann der Wert eines ersten Betriebsparameters P1 erfasst werden, wobei der Wert angibt und/oder aus dem Wert ableitbar ist, ob die landwirtschaftliche Verteilmaschine während des Spritzbetriebs in einer Fahrgasse 6 oder auf einem Vorgewende fährt. Der erfasste Wert des ersten Betriebsparameters kann ein sensorisch erfasster Wert, ein von einer Bedienperson manuell eingegebener Wert, ein in einem Speicher, z. B. einer Datenbank, hinterlegter Wert und/oder über eine Datenschnittstelle empfangener Wert sein. Beispielsweise kann der erste Betriebsparameter sensorisch mittels eines Lenkwinkelsensors oder mittels mindestens eines an dem Spritzgestänge angeordneten Beschleunigungssensors erfasst werden. Im Vorgewende treten in der Regel größere Lenkwinkel und demzufolge größere Kurvenbeschleunigungen am Spritzgestänge auf, so dass durch sensorische Erfassung dieser Größen eine Fahrt im Vorgewende erkannt werden kann.

In Abhängigkeit von dem erfassten Wert des ersten Betriebsparameters P1 trifft die Steuereinrichtung 20 eine Entscheidung, ob der erste Betriebsmodus, d. h. kein Besprühen der Fahrgassen, oder der zweite Betriebsmodus, d. h. Besprühen der Fahrspur oder Fahrgasse, ausgewählt wird. Entsprechend dem ausgewählten Betriebsmodus steuert die Steuereinrichtung die Verteileinrichtung 30 durch Schalten der dem Betriebsmodus zugeordneten Spritzdüsen und/oder durch Steuern des Spritzdrucks an. Beispielsweise ist die Steuereinrichtung 20 ausgebildet, den ersten Betriebsmodus auszuwählen, falls der erfasste Wert des ersten Betriebsparameters P1 angibt, dass die landwirtschaftliche Verteilmaschine in einer Fahrgasse 6 fährt. Alternativ kann dies auch nur eine Voraussetzung für die Auswahl des ersten Betriebsmodus sein, wobei zur Festlegung des Betriebsmodus und des zu erzeugenden Spritzmusters weitere Betriebsparameter berücksichtigt werden.

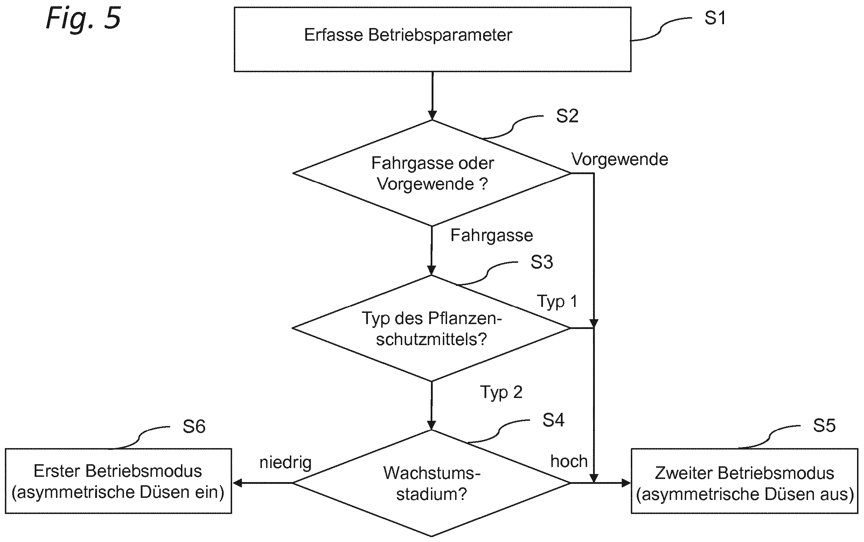

Dies ist beispielhaft anhand von Figur 5 illustriert, die ein Ablaufdiagramm zur Illustration eines Verfahrens zum Ausbringen mindestens eines flüssigen Wirkstoffes auf einen Pflanzenbestand gemäß einem Ausführungsbeispiel zeigt.

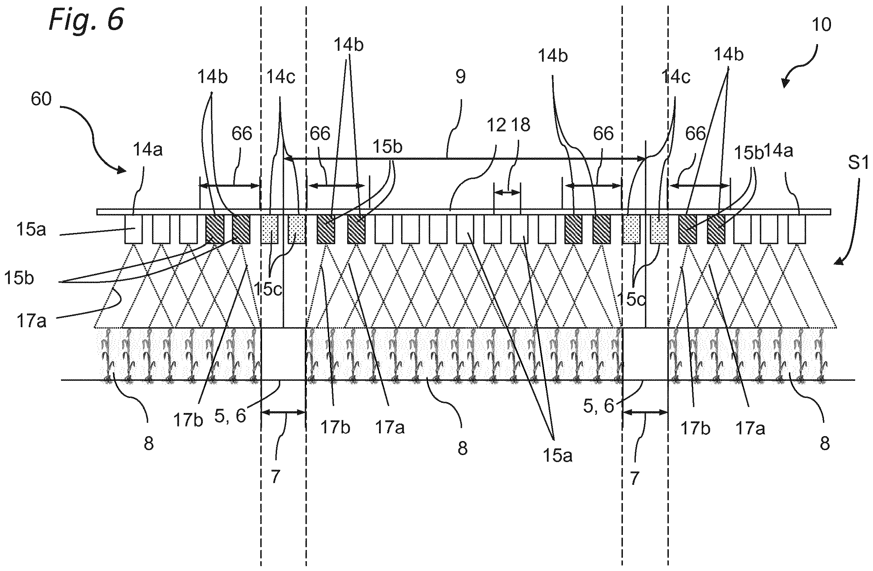

Die Steuereinrichtung 20 kann ausgebildet sein, weitere Betriebsparameter P2, P3 und P4 zur Steuerung der Düsenanordnung zu erfassen und in Abhängigkeit von den erfassten Werten wahlweise zwischen dem ersten und dem zweiten Betriebsmodus zu wechseln. Optional kann ferner ein weiterer Parameter P0 erfasst werden, der dem Fahrparameter entspricht, wie nachfolgend noch im Zusammenhang mit Figur 6 beschrieben wird.

Beispielsweise kann die Steuereinrichtung 20 ausgebildet sein, einen Wert eines zweiten Betriebsparameters P2 zu erfassen, wobei der Wert einen Typ eines Pflanzenschutzmittels angibt. Die Steuereinrichtung 20 kann ausgebildet sein, einen Wert eines dritten Betriebsparameters P3 zu erfassen, wobei der Wert einen Höhenabstand zwischen Pflanzenstand und Spritzgestänge und/oder ein Wachstumsstadium der zu bespritzenden Nutzpflanze angibt und/oder ein Maß für den Höhenabstand oder das Wachstumsstadium hieraus ableitbar ist. Die Steuereinrichtung 20 kann ausgebildet sein, einen Wert eines vierten Betriebsparameters P4 zu erfassen, wobei der Wert ein Maß für einen Schädlings- und/oder Unkrautbefall der zu bespritzenden Fahrspur 5 und/oder Fahrgasse 6 angibt.

Die Werte des ersten, zweiten dritten und/oder vierten Betriebsparameter können Werte sein, die jeweils mittels zweckmäßig ausgeführter Sensoren ermittelt werden, oder Werte sein, die von einer Bedienperson manuell über eine Eingabeeinrichtung, z. B. über ein Bedienterminal der Feldspritze 1, eingegeben werden, oder Werte sein, die in einem Speicher hinterlegt sind. Die Steuereinrichtung 20 ist ausgebildet, eine Entscheidung zur Auswahl des ersten oder des zweiten Betriebsmodus in Abhängigkeit von dem erfassten Wert des ersten, zweiten, dritten und/oder vierten Betriebsparameters zu treffen, was beispielhaft durch das Ablaufdiagramm der Figur 5 illustriert ist.

In Schritt S1 werden von der Steuereinrichtung 20 die Werte der Eingangsparameter erfasst, wie vorstehend beschrieben wurde. In Schritt S2 ermittelt die Steuereinrichtung 20 anhand des ermittelten Werts des ersten Betriebsparameters, ob das Trägerfahrzeug 3 auf einem Vorgewende fährt oder in einer Fahrgasse. Falls das Trägerfahrzeug 3 auf einem Vorgewende ohne Fahrgasse fährt, wählt die Steuereinrichtung den zweiten Betriebsmodus M2 aus und steuert die Verteilvorrichtung 20 entsprechend an.

Falls das Trägerfahrzeug 3 in einer Fahrgasse fährt, prüft die Steuereinrichtung in Schritt S3 anhand des in S1 ermittelten Werts des zweiten Betriebsparameters den Typ des Pflanzenschutzmittels und wählt in Abhängigkeit vom Typ entweder den zweiten Betriebsmodus aus (Schritt S5) oder fährt fort mit Schritt S4. Der Wert des zweiten Parameters wird typischerweise von einer Bedienperson manuell eingegeben oder aus einem Speicher abgefragt, in dem der Typ für das aktuell auf den Pflanzenbestand aufzubringende Pflanzenschutzmittel hinterlegt ist. So kann es beispielsweise bei der Verwendung von Mitteln zur Unkrautbekämpfung, d. h. zur Bekämpfung von Pflanzen, die nicht der Kulturpflanze entsprechen, gewünscht sein, ebenso im Bereich der Fahrgassen Pflanzenschutzmittel auszubringen. Entsprechend kann die Steuereinrichtung ausgebildet sein, den zweiten Betriebsmodus (Schritt S5) auszuwählen, falls der erfasste Wert des zweiten Betriebsparameters angibt, dass es sich bei dem Pflanzenschutzmittel um ein Mittel zur Unkrautbekämpfung handelt.

Die Steuereinrichtung 20 kann ferner ausgebildet sein, den ersten Betriebsmodus auszuwählen (Schritt S6) oder gemäß einer weiteren Ausführungsvariante zunächst mit Schritt S4 fortzufahren, falls der erfasste Wert des zweiten Betriebsparameters P2 angibt, dass es sich bei dem Pflanzenschutzmittel um ein Pflanzenschutzmittel gegen schädliche Lebewesen und/oder gegen schädliche Pilze und Sporen handelt, die nur die Nutzpflanze schädigen.

In einem optionalen weiteren Schritt S4 kann die Steuereinrichtung 20 anhand des Werts des dritten Betriebsparameters P3 ein Maß für das Wachstumsstadium des Pflanzenbestandes 8 ermitteln und in Abhängigkeit hiervon entweder den zweiten Betriebsmodus (Schritt S5) oder den ersten Betriebsmodus (Schritt S6) auswählen. Beispielsweise kann bei sehr großen Pflanzen keine Ansteuerung der asymmetrischen Spritzdüsen der ersten Düsenträger erfolgen, d. h. Auswahl des zweiten Betriebsmodus in Schritt S5 und keine Auswahl des ersten Betriebsmodus. Bei kleinen Pflanzen wird jedoch der erste Betriebsmodus in Schritt S6 ausgewählt und die Verteileinrichtung entsprechend angesteuert. Das Ermitteln des Wachstumsstadiums kann hierbei sensorisch erfolgen oder manuell durch eine Bedienperson eingegeben werden.

Figur 6 zeigt eine schematische Darstellung der Flüssigkeitsausbringung in einem ersten Betriebsmodus gemäß einem weiteren Ausführungsbespiel. Hierbei entsprechen Komponenten mit gleichen Bezugszeichen den Komponenten der Figur 3 und werden nicht gesondert beschrieben
Die Besonderheit dieses Ausführungsbeispiels liegt darin, dass die Verteileinrichtung 60 zum Ausbringen des flüssigen Wirkstoffes in jedem Bereich 66 zwei erste Düsenhalter 14b mit asymmetrisch arbeitenden Spritzdüsen aufweist. Mit anderen Worten weist jeder der Bereiche 66 des Spritzgestänges 10, die - in Fahrtrichtung der Verteilmaschine gesehen - seitlich angrenzend zu einer der für die Laufräder 4 des Trägerfahrzeugs vorgesehenen Fahrspuren 5 angeordnet sind, zwei zueinander benachbarte erste Düsenträger auf. Der Bereich 66 der Figur 6 ist somit breiter als der Bereich 16 der Figur 3. Diese ersten Düsenträger 14b sind als Mehrfachdüsenträger ausgebildet, in denen jeweils mindestens eine asymmetrisch arbeitenden Spritzdüse und eine symmetrisch arbeitende Spritzdüse gehaltert sind. Dies bietet den Vorzug, dass flexibler auf unterschiedliche Fahrgassenbreiten und Spurweiten reagiert werden kann.

Entspricht beispielsweise die Fahrgassenbreite 7 der Spurbreite des Trägerfahrzeugs 3, werden im ersten Betriebsmodus nur die asymmetrischen Spritzdüsen angeschaltet, die sich in denjenigen ersten Düsenhaltern 14b befinden, die direkt seitlich angrenzend zur Fahrgasse und Fahrspur angeordnet sind. In demjenigen ersten Düsenhalter, der sich benachbart hierzu befindet und weiter entfernt von der Fahrgasse ist, werden stattdessen die symmetrisch arbeitenden Spritzdüsen, die einen symmetrischen Spritzkegel 17a erzeugen, angesteuert. Das sich hieraus ergebende Spritzmuster S1 ist in Figur 6 gezeigt.

In einer Situation, in der beispielsweise die Breite der Fahrgasse 6 wesentlich größer als die Spurbreite des Trägerfahrzeugs ist, könnten im ersten Betriebsmodus nur die asymmetrischen Spritzdüsen angeschaltet werden, die sich in denjenigen ersten Düsenhaltern 14b befinden, die nicht direkt seitlich angrenzend zur Fahrspur angeordnet sind, sondern in hierzu benachbarten ersten Düsenhaltern 14b. Dagegen werden die Spritzdüsen, die den direkt seitlich angrenzend zur Fahrspur angrenzenden ersten Düsenhalter 14b angeordnet sind, im ersten Betriebsmodus deaktiviert, da sie sonst in die Fahrgasse sprühen würden. Das sich hieraus ergebende Spritzmuster ist in Figur 6 nicht dargestellt.

Die Steuereinrichtung 20 kann gemäß dieser Ausführungsvariante ausgebildet sein, einen sensorisch erfassten oder von einer Bedienperson manuell eingegebenen oder in einem Speicher hinterlegten Wert zumindest eines der folgenden Fahrparameter P0 zu erfassen: eine Reifenbreite der Laufräder, eine eingestellte Spurweite des Trägerfahrzeugs und eine Fahrgassenbreite eines zu bespritzenden Feldes. In Abhängigkeit von dem erfassten Wert eines derartigen Fahrparameters P0 kann die Steuereinrichtung 20 dann eine Teilauswahl der asymmetrisch arbeitenden Spritzdüsen der ersten Düsenträger festlegen, wie vorstehend beschrieben wurde.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen.

Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Landwirtschaftliche Verteilmaschine
- 2: Flüssiger Wirkstoff
- 3: Trägerfahrzeug
- 4: Laufrad
- 5: Fahrspur
- 6: Fahrgasse
- 7: Vorratsbehälter
- 8: Pflanzenbestand
- 9: Spurweite
- 10: Spritzgestänge
- 11: Stellelement
- 12: Mittlerer Bereich des Spritzgestänges
- 13: Ausleger
- 14a, 14c: Düsenträger
- 14b: Erster Düsenträger
- 15a, 15c: Spritzdüse
- 15b: Spritzdüse des ersten Düsenträgers
- 16: Bereich
- 17a: symmetrisches Spritzprofil
- 17b: asymmetrisches Spritzprofil
- 18: Abstand zweier Düsenträger
- 20: Steuereinrichtung
- 30: Verteileinrichtung zum Ausbringen von flüssigen Wirkstoff
- 60: Verteileinrichtung zum Ausbringen von flüssigen Wirkstoff
- 66: Bereich
- S1: Spritzprofil
- F: Fahrtrichtung
- P0, P1, P2, P3, P4, P5: Parameter

## Patentansprüche

1. Landwirtschaftliche Verteilmaschine (1) zum Ausbringen von flüssigen Wirkstoffen (2), vorzugsweise Pflanzenschutzmittel und/oder Düngemittel, umfassend
ein Trägerfahrzeug (3), aufweisend mindestens zwei Laufräder(4); und
ein am Trägerfahrzeug (3) mittelbar oder unmittelbar angeordnetes Spritzgestänge (10),
an welchem mehrere voneinander beabstandete Düsenträger (14a, 14b, 14c) angeordnet sind, die zur Aufnahme jeweils mindestens einer Spritzdüse (15a, 15b, 15c) zum Verteilen des auszubringenden Wirkstoffes (2) ausgebildet sind;
eine Steuereinrichtung (20), die ausgebildet ist, die in den Düsenträgern (14a, 14b, 14c) gehalterten Spritzdüsen (15a, 15b, 15c) anzusteuern;
**dadurch gekennzeichnet, dass** die mehreren Düsenträger (14a, 14b, 14c) mehrere erste Düsenträger (14b) umfassen, in denen jeweils mindestens eine asymmetrisch arbeitende Spritzdüse (15b) gehaltert ist,
wobei die ersten Düsenträger (14b) in Bereichen (16) des Spritzgestänges (10) angeordnet sind, welche - in Fahrtrichtung (F) der Verteilmaschine (1) gesehen - seitlich angrenzend zu einer für die Laufräder (4) des Trägerfahrzeugs (3) vorgesehenen Fahrspur (5) angeordnet sind.

2. Landwirtschaftliche Verteilmaschine (1) nach Anspruch 1,
wobei die mindestens eine asymmetrisch arbeitende Spritzdüse (15b) des ersten Düsenträgers (14b) so angeordnet ist, dass ihre Seite (19) mit kleinerem Spritzwinkel der angrenzenden Fahrspur (5) zugewandt ist.

3. Landwirtschaftliche Verteilmaschine (1) nach Anspruch 1 oder 2,
a) wobei die ersten Düsenträger (14b) oder zumindest ein Teil der ersten Düsenträger (14b) jeweils als Mehrfachdüsenträger, beispielsweise als Zweifach- oder Vierfachdüsenträger, ausgebildet sind; und/oder
b) wobei die ersten Düsenträger (14b) in Bereichen (16) des Spritzgestänges (10) angeordnet sind, welche - in Fahrtrichtung (F) der Verteilmaschine gesehen - seitlich links angrenzend oder seitlich rechts angrenzend zu einer für die Laufräder (4) des Trägerfahrzeugs (3) vorgesehenen Fahrspur (5) angeordnet sind.

4. Landwirtschaftliche Verteilmaschine (1) nach Anspruch 3, wobei der Mehrfachdüsenträger
a) mit mindestens einer symmetrisch arbeitenden Spritzdüse und mit mindestens einer asymmetrisch arbeitenden Spritzdüse bestückt ist; und/oder
b) mit mindestens zwei unterschiedliche Spritzkegel erzeugenden asymmetrischen Spritzdüsen bestückt ist.

5. Landwirtschaftliche Verteilmaschine (1) nach einem der vorherigen Ansprüche, wobei jeder der Bereiche (16) des Spritzgestänges, die - in Fahrtrichtung der Verteilmaschine gesehen - seitlich angrenzend zu einer der für die Laufräder (4) des Trägerfahrzeugs vorgesehenen Fahrspuren (5) angeordnet sind,
a) zumindest zwei zueinander benachbarte erste Düsenträger umfasst; oder
b) lediglich einen ersten Düsenträger (14b) umfasst.

6. Landwirtschaftliche Verteilmaschine (1) nach einem der vorhergehenden Ansprüche, wobei die Steuereinrichtung (20) ausgebildet ist,
a) einen sensorisch erfassten oder von einer Bedienperson manuell eingegebenen oder in einem Speicher hinterlegten Wert zumindest eines der folgenden Fahrparameter (P0) zu erfassen: eine Reifenbreite der Laufräder, eine eingestellte Spurweite des Trägerfahrzeugs und eine Fahrgassenbreite eines zu bespritzenden Feldes; und
b) in Abhängigkeit von dem erfassten Wert des zumindest einen Fahrparameters (P0) eine Teilauswahl der asymmetrisch arbeitenden Spritzdüsen der ersten Düsenträger festzulegen.

7. Landwirtschaftliche Verteilmaschine (1) nach einem der vorherigen Ansprüche, wobei die Steuereinrichtung (20) ausgebildet ist, in einem ersten Betriebsmodus (M1) zur Erzeugung eines ersten Spritzmusters (S1),
a) die asymmetrischen Spritzdüsen (15b) der ersten Düsenträger (14b) oder zumindest eine Teilauswahl hiervon anzuschalten; und
b) Spritzdüsen (15c), vorzugsweise symmetrisch arbeitende Spritzdüsen, die oberhalb der für die Laufräder (4) des Trägerfahrzeugs (3) vorgesehenen Fahrspuren (5) angeordnet sind, auszuschalten oder deaktiviert zu lassen.

8. Landwirtschaftliche Verteilmaschine (1) nach Anspruch 7, wobei die Steuereinrichtung (20) ausgebildet ist, bei Auswahl des ersten Betriebsmodus eine Reduzierung der Ausbringmenge des flüssigen Wirkstoffes (2) zu bestimmen, wobei die Reduzierung der Ausbringmenge vorzugsweise entsprechend der im ersten Betriebsmodus weniger behandelten Fläche, beispielsweise entsprechend dem prozentualen Anteil der Breite der beiden Fahrgassen oder Fahrspuren an der Gesamtbreite des Spritzgestänges bestimmt wird.

9. Landwirtschaftliche Verteilmaschine (1) nach Anspruch 7 oder 8, wobei die Steuereinrichtung (20) ausgebildet ist,
a) einen Wert eines ersten Betriebsparameters (P1) zu erfassen, wobei der Wert angibt und/oder aus dem Wert ableitbar ist, ob die landwirtschaftliche Verteilmaschine während des Spritzbetriebs in einer Fahrgasse (6) oder auf einem Vorgewende fährt; und
b) eine Entscheidung zur Auswahl des ersten Betriebsmodus in Abhängigkeit von dem erfassten Wert des ersten Betriebsparameters (P1) zu treffen.

10. Landwirtschaftliche Verteilmaschine (1) nach Anspruch 9,
a) wobei die Steuereinrichtung (20) ausgebildet ist, den ersten Betriebsmodus auszuwählen, falls der erfasste Wert des ersten Betriebsparameters (P1) angibt, dass die landwirtschaftliche Verteilmaschine in einer Fahrgasse (6) fährt; und/oder
b) wobei der erste Betriebsparameter sensorisch mittels eines Lenkwinkelsensors oder mittels mindestens eines an dem Spritzgestänge angeordneten Beschleunigungssensors erfasst wird.

11. Landwirtschaftliche Verteilmaschine (1) nach einem der Ansprüche 7 bis 10, wobei die Steuereinrichtung (20) ausgebildet ist,
a) einen Wert eines zweiten Betriebsparameters (P2) zu erfassen, wobei der Wert einen Typ eines Pflanzenschutzmittels angibt; und
b) eine Entscheidung zur Auswahl des ersten Betriebsmodus in Abhängigkeit von dem erfassten Wert des zweiten Betriebsparameters (P2) zu treffen.

12. Landwirtschaftliche Verteilmaschine (1) nach einem der Ansprüche 8 bis 11, wobei die Steuereinrichtung (20) ausgebildet ist,
a) einen Wert eines dritten Betriebsparameters (P3) zu erfassen, wobei der Wert einen Höhenabstand zwischen Pflanzenstand und Spritzgestänge und/oder ein Wachstumsstadium der zu bespritzenden Nutzpflanze angibt und/oder ein Maß für den Höhenabstand oder das Wachstumsstadium hieraus ableitbar ist; und
b) eine Entscheidung zur Auswahl des ersten Betriebsmodus in Abhängigkeit von dem erfassten Wert des dritten Betriebsparameters (P3) zu treffen.

13. Landwirtschaftliche Verteilmaschine (1) nach einem der Ansprüche 7 bis 12, wobei die Steuereinrichtung (20) ausgebildet ist,
a) einen Wert eines vierten Betriebsparameters (P4) zu erfassen, wobei der Wert ein Maß für einen Schädlings- und/oder Unkrautbefall der zu bespritzenden Fahrspur (5) und/oder Fahrgasse (6) angibt; und
b) eine Entscheidung zur Auswahl des ersten Betriebsmodus in Abhängigkeit von dem erfassten Wert des vierten Betriebsparameters (P4) zu treffen.

14. Landwirtschaftliche Verteilmaschine (1) nach einem der Ansprüche 7 bis 13, wobei die Steuereinrichtung (20) ausgebildet ist, in einem zweiten Betriebsmodus zur Erzeugung eines zweiten Spritzmusters die asymmetrischen Spritzdüsen der ersten Düsenträger auszuschalten oder deaktiviert zu lassen.

15. Landwirtschaftliche Verteilmaschine (1) nach Anspruch 14, wobei die Steuereinrichtung (20) ausgebildet ist, in dem zweiten Betriebsmodus symmetrisch arbeitende Spritzdüsen,
a) die in den ersten Düsenträger (14b) angeordnet sind; und/oder
b) die oberhalb der für die Laufräder (4) des Trägerfahrzeugs (3) vorgesehenen Fahrspuren (5) gehaltert sind; und/oder
c) die in den Bereichen (16) des Spritzgestänges, die - in Fahrtrichtung (F) der Verteilmaschine gesehen - seitlich angrenzend zu einer der für die Laufräder des Trägerfahrzeugs vorgesehenen Fahrspuren angeordnet sind,
anzuschalten.

16. Landwirtschaftliche Verteilmaschine (1) nach einem der Ansprüche 9 bis 15,
a) wobei der Wert des ersten, zweiten dritten und/oder vierten Betriebsparameters ein sensorisch erfasster Wert ist, ein von einer Bedienperson manuell eingegebener Wert ist, ein in einem Speicher hinterlegter Wert ist und/oder ein über eine Datenschnittstelle empfangener Wert ist; und/oder
b) wobei die Steuereinrichtung (20) ausgebildet ist, eine Entscheidung zur Auswahl des ersten oder des zweiten Betriebsmodus in Abhängigkeit von dem erfassten Wert des ersten, zweiten, dritten und/oder vierten Betriebsparameters zu treffen.

17. Landwirtschaftliche Verteilmaschine (1) nach einem der vorherigen Ansprüche, wobei ein Abstand zweier ersten Düsenträger, die auf unterschiedlichen Seiten seitlich angrenzend zu einer der für die Laufräder des Trägerfahrzeugs vorgesehenen Fahrspuren angeordnet sind,
a) mindestens 25 cm, mindestens 50 cm oder mindestens 60 cm beträgt; und/oder
b) höchstens 100 cm beträgt; und/oder
c) mindestens einer Breite des Laufrades und/oder mindestens einer Breite einer Fahrgasse entspricht.

18. Verfahren zum Ausbringen mindestens eines flüssigen Wirkstoffes auf einen Pflanzenbestand, der mehrere Fahrgassen aufweist, mittels einer landwirtschaftlichen Verteilmaschine, umfassend
die Bereitstellung einer landwirtschaftlichen Verteilmaschine (1), die entlang der Fahrgassen (6) verfahrbar ist, wobei die landwirtschaftliche Verteilmaschine umfasst:
ein Trägerfahrzeug (3), aufweisend mindestens zwei Laufräder (4); und
ein am Trägerfahrzeug (3) unmittelbar oder mittelbar angeordnetes Spritzgestänge (10), an welchem mehrere voneinander beabstandete Düsenträger (14a, 14b, 14c) angeordnet sind, die zur Aufnahme jeweils mindestens einer Spritzdüse (15a, 15b, 15c) zum Verteilen des auszubringenden Wirkstoffes ausgebildet sind;
eine Steuereinrichtung (20), die ausgebildet ist, in Abhängigkeit von mindestens einem ersten Betriebsparameter die in den Düsenträger gehalterten Spritzdüsen anzusteuern;
**dadurch gekennzeichnet, dass** die mehreren Düsenträger mehrere erste Düsenträger (14b) umfassen, in denen jeweils mindestens eine asymmetrisch arbeitende Spritzdüse (15b) gehaltert ist,
wobei die ersten Düsenträger (14b) in Bereichen (16) des Spritzgestänges angeordnet sind, welche zu einer für die Laufräder (4) des Trägerfahrzeugs vorgesehenen Fahrspur (5) und/oder zu einer Fahrgasse (6) des Pflanzenbestands - in Fahrtrichtung der Verteilmaschine gesehen - seitlich angrenzend angeordnet sind.

## Claims

1. An agricultural distributor (1) for distributing liquid active agents (2), preferably crop protection means and/or fertilizers, comprising
a carrier vehicle (3) having at least two running wheels (4); and
a spray boom (10) arranged indirectly or directly on the carrier vehicle (3),
and on which a plurality of spaced-apart nozzle carriers (14a, 14b, 14c) are arranged, which are designed for receiving at least one spray nozzle (15a, 15b, 15c) each for distributing the active agent (2) to be distributed;
a control device (20) which is designed to activate the spray nozzles (15a, 15b, 15c) held in the nozzle carriers (14a, 14b, 14c);
**characterized in that** the plurality of nozzle carriers (14a, 14b, 14c) comprise a plurality of first nozzle carriers (14b) in which at least one asymmetrically operating spray nozzle (15b) is in each case held,
wherein the first nozzle carriers (14b) are arranged in regions (16) of the spray boom (10) that - as seen in the direction of travel (F) of the distributor (1) - are arranged laterally adjacent to a travel lane (5) provided for the running wheels (4) of the carrier vehicle (3).

2. The agricultural distributor (1) according to Claim 1,
wherein the at least one asymmetrically operating spray nozzle (15b) of the first nozzle carrier (14b) is arranged in such a manner that its side (19) having a smaller spray angle faces the adjacent travel lane (5).

3. The agricultural distributor (1) according to Claim 1 or 2,
a) wherein the first nozzle carriers (14b) or at least some of the first nozzle carriers (14b) are each designed as multiple nozzle carriers, for example as double or quadruple nozzle carriers; and/or
b) wherein the first nozzle carriers (14b) are arranged in regions (16) of the spray boom (10) that - as seen in the direction of travel (F) of the distributor - are arranged laterally on the left or laterally on the right adjacent to a travel lane (5) provided for the running wheels (4) of the carrier vehicle (3).

4. The agricultural distributor (1) according to Claim 3, wherein the multiple nozzle carrier
a) is provided with at least one symmetrically operating spray nozzle and with at least one asymmetrically operating spray nozzle; and/or
b) is provided with at least two asymmetric spray nozzles producing different spray cones.

5. The agricultural distributor (1) according to one of the preceding claims, wherein each of the regions (16) of the spray boom that - as seen in the direction of travel of the distributor - are arranged laterally adjacent to one of the travel lanes (5) provided for the running wheels (4) of the carrier vehicle,
a) comprises at least two mutually adjacent first nozzle carriers; or
b) comprises just one first nozzle carrier (14b).

6. The agricultural distributor (1) according to one of the preceding claims, wherein the control device (20) is designed
a) to detect a value, which is detected by sensor or is input manually by an operator or is stored in a memory, of at least one of the following parameters (PO):
a tyre width of the running wheels, a set lane width of the carrier vehicle and a tramline width of a field to be sprayed; and
b) to define a partial selection of the asymmetrically operating spray nozzles of the first nozzle carriers depending on the detected value of the at least one driving parameter (PO).

7. The agricultural distributor (1) according to one of the preceding claims, wherein the control device (20) is designed so as, in a first operating mode (M1) for producing a first spray pattern (S1),
a) to switch on the asymmetric spray nozzles (15b) of the first nozzle carriers (14b) or at least a partial selection thereof; and
b) to switch off or deactivate spray nozzles (15c), preferably symmetrically operating spray nozzles, which are arranged above the travel lanes (5) provided for the running wheels (4) of the carrier vehicle (3).

8. The agricultural distributor (1) according to Claim 7, wherein the control device (20) is designed so as, when the first operating mode is selected, to determine a reduction in the distribution quantity of the liquid active agent (2), wherein the reduction in the distribution quantity is preferably determined in accordance with the area less treated in the first operating mode, for example in accordance with the percentage portion of the width of the two tramlines or travel lanes in the overall width of the spray boom.

9. The agricultural distributor (1) according to Claim 7 or 8, wherein the control device (20) is designed
a) to detect a value of a first operating parameter (P1), wherein the value indicates and/or it can be derived from the value whether the agricultural distributor is moving in a tramline (6) or at a headland during the spraying mode; and
b) to take a decision for selecting the first operating mode depending on the detected value of the first operating parameter (P1).

10. The agricultural distributor (1) according to Claim 9,
a) wherein the control device (20) is designed to select the first operating mode if the detected value of the first operating parameter (P1) indicates that the agricultural distributor is travelling in a tramline (6); and/or
b) wherein the first operating parameter is detected by sensor using a steering angle sensor or using at least one acceleration sensor arranged on the spray boom.

11. The agricultural distributor (1) according to one of Claims 7 to 10, wherein the control device (20) is designed
a) to detect a value of a second operating parameter (P2), wherein the value indicates a type of crop protection agent; and
b) to take a decision for selecting the first operating mode depending on the detected value of the second operating parameter (P2).

12. The agricultural distributor (1) according to one of Claims 8 to 11, wherein the control device (20) is designed
a) to detect a value of a third operating parameter (P3), wherein the value indicates a height distance between crop stand and spray boom and/or a growth stage of the crop plant to be sprayed, and/or an extent for the height distance or the growth stage can be derived therefrom; and
b) to take a decision for selecting the first operating mode depending on the detected value of the third operating parameter (P3).

13. The agricultural distributor (1) according to one of Claims 7 to 12, wherein the control device (20) is designed
a) to detect a value of a fourth operating parameter (P4), wherein the value indicates an extent of a pest and/or weed infestation of the travel lane (5) and/or tramline (6) to be sprayed; and
b) to take a decision for selecting the first operating mode depending on the detected value of the fourth operating parameter (P4).

14. The agricultural distributor (1) according to one of Claims 7 to 13, wherein the control device (20) is designed so as, in a second operating mode for producing a second spray pattern, to switch off or deactivate the asymmetric spray nozzles of the first nozzle carriers.

15. The agricultural distributor (1) according to Claim 14, wherein the control device (20) is designed so as, in the second operating mode, to switch on symmetrically operating spray nozzles
a) which are arranged in the first nozzle carrier (14b); and/or
b) which are held above the travel lanes (5) provided for the running wheels (4) of the carrier vehicle (3); and/or
c) which are arranged in those regions (16) of the spray boom which - as seen in the direction of travel (F) of the distributor - are arranged laterally adjacent to one of the travel lanes provided for the running wheels of the carrier vehicle.

16. The agricultural distributor (1) according to one of Claims 9 to 15,
a) wherein the value of the first, second, third and/or fourth operating parameter is a sensor-detected value, is a value input manually by an operator, is a value stored in a memory, and/or is a value received via a data interface; and/or
b) wherein the control device (20) is designed so as to make a decision for selecting the first or the second operating mode depending on the detected value of the first, second, third and/or fourth operating parameter.

17. The agricultural distributor (1) according to one of the preceding claims, wherein a distance between two first nozzle carriers which are arranged on different sides laterally adjacent to one of the travel lanes provided for the running wheels of the carrier vehicle
a) is at least 25 cm, at least 50 cm or at least 60 cm; and/or
b) is at most 100 cm; and/or
c) corresponds at least to a width of the running wheel and/or at least to a width of a tramline.

18. A method for distributing at least one liquid active agent over a crop stand having a plurality of tramlines by means of an agricultural distributor, comprising
providing an agricultural distributor (1) which is movable along the tramlines (6), wherein the agricultural distributor comprises:
a carrier vehicle (3) having at least two running wheels (4); and
a spray boom (10) which is arranged directly or indirectly on the carrier vehicle (3) and on which a plurality of spaced-apart nozzle carriers (14a, 14b, 14c) are arranged which are designed for receiving at least one spray nozzle (15a, 15b, 15c) each for distributing the active agent to be distributed;
a control device (20) which is designed to activate the spray nozzles, which are held in the nozzle carriers, depending on at least one first operating parameter;
**characterized in that** the plurality of nozzle carriers comprise a plurality of first nozzle carriers (14b) in which in each case at least one asymmetrically operating spray nozzle (15b) is held, wherein the first nozzle carriers (14b) are arranged in regions (16) of the spray boom that are arranged laterally adjacent to a travel lane (5) provided for the running wheels (4) of the carrier vehicle and/or to a tramline (6) of the crop stand - as seen in the direction of travel of the distributor.

## Revendications

1. Épandeur agricole (1) servant à distribuer des principes actifs (2) liquides, de préférence des produits phytosanitaires et/ou des engrais, comprenant
un véhicule porteur (3), présentant au moins deux roues mobiles (4) ; et
une rampe de pulvérisation (10) disposée indirectement ou directement au niveau du véhicule porteur (3),
au niveau de laquelle sont disposés plusieurs supports de buses (14a, 14b, 14c) tenus à distance les uns des autres, qui sont réalisés pour recevoir respectivement au moins une buse de pulvérisation (15a, 15b, 15c) servant à épandre le principe actif (2) à distribuer ;
un dispositif de commande (20), qui est réalisé pour piloter les buses de pulvérisation (15a, 15b, 15c) maintenues dans les supports de buses (14a, 14b, 14c) ;
**caractérisé en ce que** les plusieurs supports de buses (14a, 14b, 14c) comprennent plusieurs premiers supports de buses (14b), dans lesquels est maintenue respectivement au moins une buse de pulvérisation (15b) fonctionnant de manière asymétrique,
dans lequel les premiers supports de buses (14b) sont disposés dans des zones (16) de la rampe de pulvérisation (10), lesquelles sont disposées - vues dans le sens de circulation (F) de l'épandeur (1) - de manière latéralement adjacente par rapport à une voie de circulation (5) prévue pour les roues mobiles (4) du véhicule porteur (3).

2. Épandeur agricole (1) selon la revendication 1,
**caractérisé en ce que** l'au moins une buse de pulvérisation (15b) fonctionnant de manière asymétrique du premier support de buses (14b) est disposée de telle sorte que son côté (19) présentant un angle de pointe plus petit est tourné vers la voie de circulation (5) adjacente.

3. Épandeur agricole (1) selon la revendication 1 ou 2,
a) dans lequel les premiers supports de buses (14b) ou au moins une partie des premiers supports de buses (14b) sont réalisés respectivement en tant que support à plusieurs buses, par exemple en tant que support à deux buses ou support à quatre buses ; et/ou
b) dans lequel les premiers supports de buses (14b) sont disposés dans des zones (16) de la rampe de pulvérisation (10), lesquelles sont disposées - vues dans le sens de circulation (F) de l'épandeur - de manière latéralement adjacente à gauche ou de manière latéralement adjacente à droite par rapport à une voie de circulation (5) prévue pour les roues mobiles (4) du véhicule porteur (3).

4. Épandeur agricole (1) selon la revendication 3, dans lequel le support à plusieurs buses
a) est équipé d'au moins une buse de pulvérisation fonctionnant de manière symétrique et d'au moins une buse de pulvérisation fonctionnant de manière asymétrique ; et/ou
b) est équipé d'au moins deux buses de pulvérisation asymétriques générant deux cônes de pulvérisation différents.

5. Épandeur agricole (1) selon l'une quelconque des revendications précédentes, dans lequel chacune des zones (16) de la rampe de pulvérisation, qui sont disposées - vues dans le sens de circulation de l'épandeur - de manière latéralement adjacente par rapport à une des voies de circulation (5) prévues pour les roues mobiles (4) du véhicule porteur,
a) comprend au moins deux premiers supports de buses voisins l'un par rapport à l'autre ; ou
b) comprend seulement un premier support de buses (14b) .

6. Épandeur agricole (1) selon l'une quelconque des revendications précédentes, dans lequel le dispositif de commande (20) est réalisé
a) pour détecter une valeur détectée par capteur ou saisie manuellement par un utilisateur ou enregistrée dans une mémoire d'au moins un des paramètres de circulation (P0) suivants : une largeur de pneu des roues mobiles, un écartement de voie réglé du véhicule porteur et une largeur de voie de circulation d'un champ à pulvériser ; et
b) pour fixer, en fonction de la valeur détectée de l'au moins un paramètre de circulation (P0), une sélection partielle des buses de pulvérisation fonctionnant de manière asymétrique des premiers supports de buse.

7. Épandeur agricole (1) selon l'une quelconque des revendications précédentes, dans lequel le dispositif de commande (20) est réalisé, dans un premier mode de fonctionnement (M1) servant à générer un premier schéma de pulvérisation (S1),
a) pour activer les buses de pulvérisation (15b) asymétriques des premiers supports de buses (14b) ou au moins une sélection partielle de celles-ci ; et
b) pour désactiver ou rendre inactives des buses de pulvérisation (15c), de préférence des buses de pulvérisation fonctionnant de manière symétrique, qui sont disposées au-dessus des voies de circulation (5) prévues pour les roues mobiles (4) du véhicule porteur (3) .

8. Épandeur agricole (1) selon la revendication 7, dans lequel le dispositif de commande (20) est réalisé pour définir lors de la sélection du premier mode de fonctionnement une réduction de la quantité distribuée du principe actif (2) liquide, dans lequel la réduction de la quantité distribuée est définie de préférence conformément à la surface moins traitée dans le premier mode de fonctionnement, par exemple conformément à la proportion en pourcentages de la largeur des deux allées de circulation ou voies de circulation au niveau de la largeur totale de la rampe de pulvérisation.

9. Épandeur agricole (1) selon la revendication 7 ou 8, dans lequel le dispositif de commande (20) est réalisé
a) pour détecter une valeur d'un premier paramètre de fonctionnement (P1), dans lequel la valeur indique et/ou il peut être déduit à partir de la valeur si l'épandeur agricole circule, pendant le mode de fonctionnement de pulvérisation, sur une allée de circulation (6) ou sur un bout de champ ; et
b) pour prendre une décision concernant la sélection du premier mode de fonctionnement en fonction de la valeur détectée du premier paramètre de fonctionnement (P1).

10. Épandeur agricole (1) selon la revendication 9,
a) dans lequel le dispositif de commande (20) est réalisé pour sélectionner le premier mode de fonctionnement si la valeur détectée du premier paramètre de fonctionnement (P1) indique que l'épandeur agricole circule sur une allée de circulation (6) ; et/ou
b) dans lequel le premier paramètre de fonctionnement est détecté par capteur au moyen d'un capteur d'angle de braquage ou au moyen d'au moins un capteur d'accélération disposé au niveau de la rampe de pulvérisation.

11. Épandeur agricole (1) selon l'une quelconque des revendications 7 à 10, dans lequel le dispositif de commande (20) est réalisé
a) pour détecter une valeur d'un deuxième paramètre de fonctionnement (P2), dans lequel la valeur indique un type d'un produit phytosanitaire ; et
b) pour prendre une décision concernant la sélection du premier mode de fonctionnement en fonction de la valeur détectée du deuxième paramètre de fonctionnement (P2).

12. Épandeur agricole (1) selon l'une quelconque des revendications 8 à 11, dans lequel le dispositif de commande (20) est réalisé
a) pour détecter une valeur d'un troisième paramètre de fonctionnement (P3), dans lequel la valeur indique une distance en hauteur entre les cultures de plantes et la rampe de pulvérisation et/ou un stade de croissance de la plante utile à pulvériser et/ou une mesure pour la distance en hauteur ou le stade de croissance peut être déduite sur cette base ; et
b) pour prendre une décision concernant la sélection du premier mode de fonctionnement en fonction de la valeur détectée du troisième paramètre de fonctionnement (P3).

13. Épandeur agricole (1) selon l'une quelconque des revendications 7 à 12, dans lequel le dispositif de commande (20) est réalisé
a) pour détecter une valeur d'un quatrième paramètre de fonctionnement (P4), dans lequel la valeur indique une mesure pour une attaque parasitaire ou une infestation de mauvaises herbes de la voie de circulation (5) et/ou de l'allée de circulation (6) à pulvériser ; et
b) pour prendre une décision concernant la sélection du premier mode de fonctionnement en fonction de la valeur détectée du quatrième paramètre de fonctionnement (P4).

14. Épandeur agricole (1) selon l'une quelconque des revendications 7 à 13, dans lequel le dispositif de commande (20) est réalisé pour désactiver ou rendre inactives les buses de pulvérisation asymétriques des premiers supports de buses dans un deuxième mode de fonctionnement pour générer un deuxième schéma de pulvérisation.

15. Épandeur agricole (1) selon la revendication 14, dans lequel le dispositif de commande (20) est réalisé pour activer des buses de pulvérisation fonctionnant de manière symétrique dans le deuxième mode de fonctionnement
a) qui sont disposées dans le premier support de buses (14b) ; et/ou
b) qui sont maintenues au-dessus des voies de circulation (5) prévues pour les roues mobiles (4) du véhicule porteur (3) ; et/ou
c) qui sont disposées dans les zones (16) de la rampe de pulvérisation, qui sont disposées - vues dans le sens de circulation (F) de l'épandeur - de manière latéralement adjacente par rapport à une des voies de circulation prévues pour les roues mobiles du véhicule porteur.

16. Épandeur agricole (1) selon l'une quelconque des revendications 9 à 15,
a) dans lequel la valeur du premier, deuxième, troisième et/ou quatrième paramètre de fonctionnement est une valeur détectée par capteur, est une valeur saisie manuellement par un utilisateur, est une valeur enregistrée dans une mémoire et/ou est une valeur reçue par l'intermédiaire d'une interface de données ; et/ou
b) dans lequel le dispositif de commande (20) est réalisé pour prendre une décision concernant la sélection du premier ou du deuxième mode de fonctionnement en fonction de la valeur détectée du premier, deuxième, troisième et/ou quatrième paramètre de fonctionnement.

17. Épandeur agricole (1) selon l'une quelconque des revendications précédentes, dans lequel une distance de deux premiers supports de buses, qui sont disposés sur des côtés différents de manière latéralement adjacente par rapport à une des voies de circulation prévues pour les roues mobiles du véhicule porteur,
a) est d'au moins 25 cm, d'au moins 50 cm ou d'au moins 60 cm ; et/ou
b) est au maximum de 100 cm ; et/ou
c) correspond au moins à une largeur de la roue mobile et/ou au moins à une largeur d'une allée de circulation.

18. Procédé servant à distribuer au moins un principe actif liquide sur des cultures de plantes, qui présentent plusieurs allées de circulation, au moyen d'un épandeur agricole, comprenant
la fourniture d'un épandeur agricole (1), qui peut se déplacer le long d'allées de circulation (6), dans lequel l'épandeur agricole comprend :
un véhicule porteur (3), présentant au moins deux roues mobiles (4) ; et
une rampe de pulvérisation (10) disposée indirectement ou directement au niveau du véhicule porteur (3), au niveau de laquelle sont disposés plusieurs supports de buses (14a, 14b, 14c) tenus à distance les uns des autres, qui sont réalisés pour recevoir respectivement au moins une buse de pulvérisation (15a, 15b, 15c) servant à épandre le principe actif à distribuer ;
un dispositif de commande (20) qui est réalisé pour piloter en fonction d'au moins un premier paramètre de fonctionnement les buses de pulvérisation maintenues dans le support de buses ;
**caractérisé en ce que** les plusieurs supports de buses comprennent plusieurs premiers supports de buses (14b), dans lesquels respectivement au moins une buse de pulvérisation (15b) fonctionnant de manière asymétrique est maintenue,
dans lequel les premiers supports de buses (14b) sont disposés dans des zones (16) de la rampe de pulvérisation, lesquelles sont disposées - vues dans le sens de circulation de l'épandeur - de manière latéralement adjacente par rapport à une voie de circulation (5) prévue pour les roues mobiles (4) du véhicule porteur et/ou par rapport à une allée de circulation (6) des cultures de plantes.
